(19) Europäisches Patentamt
European Patent Office
Office européen des brevets

(11) EP 3 228 657 B1

(12) EUROPEAN PATENT SPECIFICATION

(45) Date of publication and mention of the grant of the patent:
**23.10.2019 Bulletin 2019/43**

(21) Application number: **15872711.5**

(22) Date of filing: **09.12.2015**

(51) Int Cl.:
***C08L 9/00*** *(2006.01)* ***B60C 1/00*** *(2006.01)*
***C08K 3/00*** *(2018.01)* ***C08L 25/08*** *(2006.01)*
***C08L 47/00*** *(2006.01)* ***C08L 9/06*** *(2006.01)*

(86) International application number:
**PCT/JP2015/084474**

(87) International publication number:
**WO 2016/104142 (30.06.2016 Gazette 2016/26)**

(54) **PNEUMATIC TIRE**

LUFTREIFEN

PNEUMATIQUE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **24.12.2014 JP 2014260946**

(43) Date of publication of application:
**11.10.2017 Bulletin 2017/41**

(73) Proprietor: **Sumitomo Rubber Industries, Ltd.**
**Kobe-shi, Hyogo 651-0072 (JP)**

(72) Inventors:
- **MIYAZAKI, Tatsuya**
**Kobe-shi**
**Hyogo 651-0072 (JP)**
- **WASHIZU, Kensuke**
**Kobe-shi**
**Hyogo 651-0072 (JP)**

(74) Representative: **Manitz Finsterwald**
**Patent- und Rechtsanwaltspartnerschaft mbB**
**Martin-Greif-Strasse 1**
**80336 München (DE)**

(56) References cited:
**EP-A1- 2 103 650**
**EP-A1- 2 799 480**
**WO-A1-02/20655**
**JP-A- H09 309 978**
**JP-A- 2007 177 209**
**JP-A- 2008 184 505**
**JP-A- 2008 208 265**
**JP-A- 2009 138 025**
**JP-A- 2009 138 025**
**JP-A- 2011 088 998**
**JP-A- 2014 231 612**
**US-A1- 2011 213 049**
**US-A1- 2014 155 520**

Remarks:
The file contains technical information submitted after the application was filed and not included in this specification

EP 3 228 657 B1

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

TECHNICAL FIELD

The present invention relates to a pneumatic tire including a tread formed from a rubber composition.

BACKGROUND ART

There is a need for treads for tires that maintain excellent handling stability (grip performance) from the start to the end of running, or, in other words, have excellent initial grip performance and further maintain good grip performance during the middle and late periods of running.

In order to improve initial grip performance, methods have been proposed which use an increased amount of a low softening point resin, a liquid polymer, or the like, or involve incorporation of a low-temperature softening agent. Also, in order to achieve stable grip performance during running when the tire temperature reaches 60°C or higher, methods have been proposed which use a high softening point resin.

However, when a low softening point resin is incorporated, initial grip performance is improved, but unfortunately grip performance during the middle and late periods of running decreases along with an increase in the temperature of the tread. On the other hand, the incorporation of a high softening point resin such as a coumarone-indene resin allows stable grip performance to be achieved during the middle and late periods of running but unfortunately greatly reduces initial grip performance.

Patent Literature 1 discloses, as a possible technique to solve the above problems, incorporating a combination of a low softening point resin and a high softening point resin into a rubber composition. However, since the resin content greatly affects the temperature properties of the entire rubber, only limited amounts of resins can be incorporated. As a result, the initial grip performance and stable grip performance during running obtained by the combined use of a low softening point resin and a high softening point resin are inferior to those obtained when either resin is incorporated alone.

As conventionally known, a diene rubber such as styrene butadiene rubber with high styrene content is used as a rubber component to obtain good grip performance. However, this unfortunately leads to blowing (porosity) during running under high temperature conditions. Particularly in the case of formulations which incorporate at least a certain amount of filler such as carbon black or softeners to obtain high grip performance, blowing can easily occur because they show high heat build-up and suffer easy breakage of crosslinks and thus cannot withstand the inflation pressure of the volatile components in the rubber. For use in racing tires, since in summer the temperature of the tire tread rises up to 100°C and the internal temperature of the tread rises up to 120°C, no occurrence of blowing is desired even when the tires are run approximately 40 laps of a circuit at such high temperatures. If blowing occurs inside the tread during a race, then rubber stiffness decreases so that running lap time deteriorates, and further the tread portion may even be broken, chipped, or separated.

As described above, no technique has been established that allows a formulation including a styrene butadiene rubber with high styrene content, a high filler or softener content formulation, or similar formulations to reduce the occurrence of blowing even during high-temperature running while achieving high grip performance. For example, even though it has been proposed to add a terpene-based resin or aromatic resin which is structurally well compatible with rubber and tends to be readily miscible therewith, there is room for improvement to improve initial grip performance and stable grip performance during the middle and late periods of running and at the same time reduce the occurrence of blowing even during high-temperature running.

Tires for trucks and buses have a higher tread contact pressure than those for passenger vehicles, which is traditionally advantageous for wet performance. These days, however, further improvements are desired in wet grip performance, fuel economy, and durability (EB). Since formulations for truck and bus tires are rich in natural rubber and include a relatively small amount of carbon black having a large nitrogen adsorption specific surface area and no or minimal amounts of softeners, they have no blowing problem. However, there is little room for improvement of their polymer or carbon black systems. Therefore, other approaches have been sought to improve the properties.

EP 2 103 650 A1 discloses use of hydrogenated terpene resins having a softening point of not lower than 130°C by partially or fully hydrogenating terpene resin. The amount of the hydrogenated terpene resin is disclosed to be in the range of 10 to 60 parts by mass per 100 parts by mass of the rubber component (phr).

Use of a hydrogenated terpene resin having a softening point of 80 to 180°C in an amount of 0.5 to 50 parts by mass is disclosed in JP 2014 231612 A.

JP 2009 138025 A, JP 2011 088998 A, JP 2008 208265 A and EP 2 799 480 A1 disclose a rubber compositions containing hydrogenated terpene resins.

In US 2011/0213049 A1 a rubber composition is disclosed which contains a non-hydrogenated terpene resin.

A further rubber composition is disclosed in US 2014/0155520 A1.

CITATION LIST

PATENT LITERATURE

Patent Literature 1: JP 2004-137463 A

SUMMARY OF INVENTION

TECHNICAL PROBLEM

The present invention aims to solve the above problems and provide a pneumatic tire including a tread formed from a rubber composition that can simultaneously highly improve initial grip performance and stable grip performance during the middle and late periods of running, and further can reduce the occurrence of blowing even during high-temperature running. The present invention also aims to provide a pneumatic tire including a tread formed from a rubber composition that can achieve a balanced improvement in grip performance, especially wet grip performance, fuel economy, and durability.

SOLUTION TO PROBLEM

The present invention relates to a pneumatic tire, including a tread, the tread being formed from a rubber composition containing a diene rubber, the rubber composition further containing a hydrogenated terpene aromatic resin obtained by hydrogenation of double bonds of a terpene aromatic resin, the hydrogenated terpene aromatic resin having a degree of hydrogenation of double bonds of 5% to 100%, a hydroxyl value of 20 mg KOH/g or less, and a softening point of 116°C to 180°C, the hydrogenated terpene aromatic resin being present in an amount of 1 to 50 parts by mass per 100 parts by mass of the diene rubber.

The hydrogenated terpene aromatic resin preferably has a softening point of 116°C to 160°C.

The hydrogenated terpene aromatic resin preferably has a hydroxyl value of 0 mg KOH/g.

The diene rubber preferably includes 60% by mass or more of a styrene butadiene rubber having a styrene content of 19% to 60% by mass.

All components of the rubber composition are preferably present in a total amount of 270% by mass or more per 100% by mass of the diene rubber.

Preferably, the rubber composition further contains an inorganic filler having a nitrogen adsorption specific surface area of 5 to 120 $m^2/g$ in an amount of 1 to 70 parts by mass per 100 parts by mass of the diene rubber, and the inorganic filler includes at least one selected from the group consisting of compounds represented by the formula below, magnesium sulfate, and silicon carbide,

$$mM \cdot xSiO_y \cdot zH_2O$$

wherein M represents at least one metal selected from the group consisting of Al, Mg, Ti, Ca, and Zr, or an oxide or hydroxide of the metal; m represents an integer of 1 to 5; x represents an integer of 0 to 10; y represents an integer of 2 to 5; and z represents an integer of 0 to 10.

The inorganic filler is preferably aluminum hydroxide.

ADVANTAGEOUS EFFECTS OF INVENTION

The pneumatic tire of the present invention includes a tread formed from a rubber composition. The rubber composition contains a diene rubber and a hydrogenated terpene aromatic resin obtained by hydrogenation of the double bonds of a terpene aromatic resin. The hydrogenated terpene aromatic resin has a degree of hydrogenation of double bonds of 5% to 100%, a hydroxyl value of 20 mg KOH/g or less, and a softening point of 116°C to 180°C. The hydrogenated terpene aromatic resin is present in an amount of 1 to 50 parts by mass per 100 parts by mass of the diene rubber. Such a pneumatic tire can simultaneously highly improve initial grip performance and stable grip performance during the middle and late periods of running, especially both properties on dry roads, and further can reduce the occurrence of blowing even during high-temperature running. Furthermore, the pneumatic tire can achieve a balanced improvement in grip performance, especially wet grip performance, fuel economy, and durability.

DESCRIPTION OF EMBODIMENTS

The pneumatic tire of the present invention includes a tread formed from a rubber composition that contains a

diene rubber and a hydrogenated terpene aromatic resin obtained by hydrogenation of the double bonds of a terpene aromatic resin. The hydrogenated terpene aromatic resin has a degree of hydrogenation of double bonds of 5% to 100%, a hydroxyl value of 20 mg KOH/g or less, and a softening point of 116°C to 180°C. The hydrogenated terpene aromatic resin is present in an amount of 1 to 50 parts by mass per 100 parts by mass of the diene rubber.

By incorporating a predetermined amount of a specific hydrogenated terpene aromatic resin into a rubber composition containing a diene rubber, it is possible to simultaneously highly improve initial grip performance and stable grip performance during the middle and late periods of running, especially both properties on dry roads, and further can reduce the occurrence of blowing even during high-temperature running, as compared to conventional techniques that use a combination of a low softening point resin and a high softening point resin or add a terpene-based resin or aromatic resin which is well miscible with rubber. Furthermore, it is also possible to achieve a balanced improvement in grip performance, especially wet grip performance, fuel economy, and durability.

This is presumably because the hydrogenated terpene aromatic resin having a degree of hydrogenation of 5% to 100%, a hydroxyl value of 20 mg KOH/g or less, and a softening point of 116°C to 180°C has the properties described below which allow the above effects to be significantly achieved.

Since the hydrogenated terpene aromatic resin has a high structural flexibility due to being hydrogenated, the resin blooms to the tread surface fast despite its molecular weight and softening point. Moreover, the hydrogenated terpene aromatic resin, which has a reduced amount of double bonds due to hydrogenation, shows greatly increased dispersibility in the diene rubber, and at the same time promotes the crosslinking of rubber, without adsorbing the sulfur of the crosslinking agent, to produce uniform crosslinking sites between rubber polymers, thereby increasing the modulus of the vulcanized rubber composition. Furthermore, the uniform and tight crosslinking of rubber results in good blowing resistance (i.e., well-reduced occurrence of blowing). In addition, the hydrogenated terpene aromatic resin with a hydroxyl value of 20 mg KOH/g or less shows low self-aggregation properties in rubber, resulting in low Shore hardness (Hs) at room temperature and therefore a small temperature dependence of Hs.

The above effects are particularly pronounced when styrene butadiene rubber is used as a rubber component.

The rubber composition in the present invention contains a diene rubber as a rubber component.

Any diene rubber may be used, and examples include isoprene-based rubbers such as natural rubber (NR), epoxidized NR (ENR), and polyisoprene rubber (IR), polybutadiene rubber (BR), styrene butadiene rubber (SBR), styrene isoprene butadiene rubber (SIBR), chloroprene rubber (CR), and acrylonitrile butadiene rubber (NBR). These diene rubbers may be used alone, or two or more of these may be used in combination. In racing or passenger vehicle applications requiring high grip performance, styrene butadiene rubber is preferred in view of grip performance. In truck and bus or SUV applications requiring high abrasion resistance, durability, and chip resistance, natural rubber or polybutadiene rubber is preferred, with a combination of natural rubber and polybutadiene rubber being more preferred, in view of the balance of wet grip performance, fuel economy, and durability.

Any styrene butadiene rubber (SBR) may be used, and examples include emulsion polymerized SBR (E-SBR) and solution polymerized SBR (S-SBR) all of which may or may not be oil extended. Particularly in view of grip performance, oil extended high molecular weight SBR is preferred. Chain end-modified or backbone-modified S-SBR, which exhibits increased interaction with filler, may also be used. These types of SBR may be used alone, or two or more of these may be used in combination.

The SBR preferably has a styrene content of 19% by mass or more, more preferably 21% by mass or more, still more preferably 25% by mass or more, particularly preferably 30% by mass or more. The styrene content is also preferably 60% by mass or less, more preferably 55% by mass or less, still more preferably 50% by mass or less, particularly preferably 45% by mass or less. When the styrene content is less than 19% by mass, insufficient grip performance may be obtained, while when the styrene content is more than 60% by mass, styrene groups may be located adjacent to one another so that the polymer becomes excessively hard and non-uniform crosslinking is more likely to occur, resulting in deterioration of blowing resistance during high-temperature running. In addition, temperature dependence tends to increase so that larger changes in properties are obtained relative to changes in temperature, with the result that stable grip performance during the middle and late periods of running tends not to be well achieved.

The styrene content of SBR as used herein is determined by $^1$H-NMR analysis.

The SBR preferably has a vinyl content of 10% by mass or more, more preferably 15% by mass or more. If the vinyl content is less than 10% by mass, sufficient Hs or grip performance may not be obtained. The vinyl content is preferably 90% by mass or less, more preferably 80% by mass or less, still more preferably 70% by mass or less, particularly preferably 60% by mass or less. If the vinyl content is more than 90% by mass, grip performance, EB (durability), or abrasion resistance may deteriorate.

The vinyl content (1,2-butadiene unit content) of SBR as used herein can be determined by infrared absorption spectrometry.

The SBR preferably has a glass transition temperature (Tg) of -45°C or higher, more preferably -40°C or higher. The Tg is preferably 10°C or lower, and is more preferably 5°C or lower to prevent embrittlement cracking in the temperate zones in winter.

The glass transition temperature of SBR as used herein is determined by differential scanning calorimetry (DSC) at a rate of temperature rise of 10°C/min in accordance with JIS K 7121.

The SBR preferably has a weight average molecular weight (Mw) of 700, 000 or more, more preferably 900,000 or more, still more preferably 1,000,000 or more. The Mw is also preferably 2,000,000 or less, more preferably 1,800,000 or less. The use of SBR having a Mw of 700,000 or more can provide higher grip performance and higher blowing resistance. If the Mw is more than 2,000,000, blowing during high-temperature running may not be prevented.

Herein, the weight average molecular weight of SBR can be determined by gel permeation chromatography (GPC) (GPC-8000 series available from Tosoh Corporation, detector: differential refractometer, column: TSKGEL SUPERMALTPORE HZ-M available from Tosoh Corporation) calibrated with polystyrene standards.

The amount of SBR based on 100% by mass of the diene rubber is preferably 60% by mass or more, more preferably 65% by mass or more, still more preferably 70% by mass or more. The amount is preferably 80% by mass or more for use in summer tires which are not used in winter or in racing tires. If it is less than 60% by mass, sufficient blowing resistance tends not to be obtained. The upper limit of the amount of SBR is not particularly limited and may be 100% by mass.

In particular, the diene rubber preferably includes 60% by mass or more of SBR having a styrene content of 19% to 60% by mass, more preferably 65% by mass or more of SBR having a styrene content of 25% to 55% by mass. In this case, higher grip performance and higher blowing resistance can be achieved.

Any natural rubber (NR) may be used, including those commonly used in the tire industry, such as SIR20, RSS#3, TSR20, deproteinized natural rubber (DPNR), and highly purified natural rubber (UPNR).

For tires of trucks and buses, the amount of NR based on 100% by mass of the diene rubber is preferably 60% to 100% by mass, while for tires of passenger vehicles or commercial vehicles, the amount of NR based on 100% by mass of the diene rubber is preferably 0% to 70% by mass. If the amount of NR is outside the range indicated above, sufficient grip performance, abrasion resistance, or durability may not be obtained.

Any BR may be used including, for example: high-cis content BR such as BR1220 available from Zeon Corporation and BR130B and BR150B both available from Ube Industries, Ltd.; modified BR such as BR1250H available from Zeon Corporation; BR containing syndiotactic polybutadiene crystals such as VCR412 and VCR617 both available from Ube Industries, Ltd.; and BR synthesized using rare earth catalysts such as BUNA-CB25 available from Lanxess. These types of BR may be used alone, or two or more of these may be used in combination. In view of fuel economy and abrasion resistance, preferred among these is BR synthesized using rare earth catalysts (rare earth-catalyzed BR).

The term "rare earth-catalyzed BR" refers to a polybutadiene rubber synthesized using a rare earth catalyst and is characterized by high cis content and low vinyl content. The rare earth-catalyzed BR may be one commonly used in the production of tires.

The rare earth catalyst used in the synthesis of the rare earth-catalyzed BR may be a known one. Examples include catalysts containing lanthanide rare earth compounds, organoaluminum compounds, aluminoxanes, or halogen-containing compounds, optionally with Lewis bases. Among these, neodymium (Nd) catalysts including Nd-containing compounds as lanthanide rare earth compounds are particularly preferred.

Examples of the lanthanide rare earth compounds include halides, carboxylates, alcoholates, thioalcoholates, and amides of rare earth metals of atomic numbers 57 to 71. Among these, Nd catalysts as described above are preferred because they allow the resulting BR to have high cis content and low vinyl content.

Examples of the organoaluminum compounds include compounds represented by the formula: $AlR^aR^bR^c$ wherein $R^a$, $R^b$, and $R^c$ are the same as or different from one another and each represent a hydrogen atom or a C1-C8 hydrocarbon group. Examples of the aluminoxanes include acyclic aluminoxanes and cyclic aluminoxanes. Examples of the halogen-containing compounds include aluminum halides represented by the formula: $AlX_kR^d_{3-k}$ wherein X represents a halogen atom, $R^d$ represents a C1-C20 alkyl, aryl, or aralkyl group, and k is 1, 1.5, 2, or 3; strontium halides such as $Me_3SrCl$, $Me_2SrCl_2$, $MeSrHCl_2$, and $MeSrCl_3$; and metal halides such as silicon tetrachloride, tin tetrachloride, and titanium tetrachloride. Lewis bases may be used for complexation of lanthanide rare earth compounds, and suitable examples include acetylacetone, ketones, and alcohols.

In the polymerization of butadiene, the rare earth catalyst may be used in solution in an organic solvent (e.g. n-hexane, cyclohexane, n-heptane, toluene, xylene, or benzene) or may be supported on an appropriate carrier, such as silica, magnesia, or magnesium chloride. With regard to the polymerization conditions, the polymerization may be either solution polymerization or bulk polymerization, preferably at a polymerization temperature of -30°C to 150°C, and the polymerization pressure may be chosen appropriately depending on other conditions.

The rare earth-catalyzed BR preferably has a cis-1,4-linkage content (cis content) of 90% by mass or more, more preferably 93% by mass or more, still more preferably 95% by mass or more. If the cis content is less than 90% by mass, durability or abrasion resistance tends to deteriorate.

The rare earth-catalyzed BR preferably has a vinyl content of 1.8% by mass or less, more preferably 1.5% by mass or less, still more preferably 1.0% by mass or less, particularly preferably 0.8% by mass or less. If the vinyl content is more than 1.8% by mass, durability or abrasion resistance tends to deteriorate.

The vinyl content (1,2-butadiene unit content) and cis content (cis 1,4-linkage content) of BR as used herein can be measured by infrared absorption spectrometry.

When the diene rubber incorporates BR, the amount of BR based on 100% by mass of the diene rubber is preferably 10% by mass or more, more preferably 15% by mass or more, still more preferably 20% by mass or more. The amount of BR is also preferably 70% by mass or less, more preferably 60% by mass or less, and is preferably 40% by mass or less for use in tires requiring grip performance. With less than 10% by mass or more than 70% by mass of BR, abrasion resistance, grip performance, or fuel economy tends to be insufficient.

The rubber composition in the present invention may contain rubber components other than the diene rubber. Examples of other rubber components include butyl rubber (IIR) .

The amount of the diene rubber based on 100% by mass of the total rubber components including other rubber components is preferably 90% by mass or more, more preferably 95% by mass or more. The upper limit of the amount is not particularly limited and may be 100% by mass.

The rubber composition in the present invention contains a hydrogenated terpene aromatic resin obtained by hydrogenation of the double bonds of a terpene aromatic resin. The hydrogenated terpene aromatic resin has a degree of hydrogenation of double bonds of 5% to 100%, a hydroxyl value of 20 mg KOH/g or less, and a softening point of 116°C to 180°C.

The term "terpene aromatic resin" used in the hydrogenated terpene aromatic resin refers to a compound obtained by copolymerizing an aromatic compound with a terpene compound by a usual method. Specifically, for example, the compound may be produced by adding dropwise raw materials in any order into an organic solvent such as toluene in the presence of a catalyst such as $BF_3$ and reacting the mixture at a predetermined temperature for a predetermined time.

The ratio between the aromatic compound and the terpene compound copolymerized may be chosen appropriately so that the resulting hydrogenated terpene aromatic resin has the physical properties described later. The terpene aromatic resin may contain copolymerization units other than the aromatic compound and terpene compound, such as indene, as long as the resulting hydrogenated terpene aromatic resin has the physical properties described later.

The aromatic compound may be any compound having an aromatic ring, and examples include phenol compounds such as phenol, alkylphenols, alkoxyphenols, and unsaturated hydrocarbon group-containing phenols; naphthol compounds such as naphthol, alkylnaphthols, alkoxynaphthols, and unsaturated hydrocarbon group-containing naphthols; and styrene derivatives such as styrene, alkylstyrenes, alkoxystyrenes, and unsaturated hydrocarbon group-containing styrenes, with styrene derivatives being preferred. The alkyl or alkoxy groups in the foregoing compounds each preferably have 1 to 20 carbon atoms, more preferably 1 to 12 carbon atoms. The unsaturated hydrocarbon groups in the foregoing compounds each preferably have 2 to 20 carbon atoms, more preferably 2 to 12 carbon atoms.

The aromatic compound may have one substituent or two or more substituents on the aromatic ring. In the case of the aromatic compound having two or more substituents on the aromatic ring, the substituents may be located at any of the ortho, meta, or para positions. Moreover, in the case of a styrene derivative having a substituent on the aromatic ring, the substituent may be at the ortho, meta, or para position with respect to the vinyl group of styrene.

The aromatic compounds may be used alone or in combinations of two or more.

Specific examples of the alkylphenols include methylphenol, ethylphenol, butylphenol, t-butylphenol, octylphenol, nonylphenol, decylphenol, and dinonylphenol. They may have the respective substituents at any of the ortho, meta, or para positions. Among these, t-butylphenol is preferred, with p-t-butylphenol being more preferred.

Specific examples of the alkylnaphthols include compounds obtained by replacing the phenol moiety of the alkylphenols with naphthol.

Specific examples of the alkylstyrenes include compounds obtained by replacing the phenol moiety of the alkylphenols with styrene.

Specific examples of the alkoxyphenols include compounds obtained by replacing the alkyl groups of the alkylphenols with the corresponding alkoxy groups. Specific examples of the alkoxynaphthols include compounds obtained similarly by replacing the alkyl groups of the alkylnaphthols with the corresponding alkoxy groups. Specific examples of the alkoxystyrenes include compounds obtained by replacing the alkyl groups of the alkylstyrenes with the corresponding alkoxy groups.

Examples of the unsaturated hydrocarbon group-containing phenols include compounds which contain at least one hydroxyphenyl group per molecule, and further in which at least one hydrogen atom of the phenyl group is substituted with an unsaturated hydrocarbon group. The unsaturated bond in the unsaturated hydrocarbon group may be a double bond or a triple bond.

Examples of the unsaturated hydrocarbon group include C2-C20 alkenyl groups.

Specific examples of the unsaturated hydrocarbon group-containing phenols include isopropenylphenol and butenylphenol. Specific examples of the unsaturated hydrocarbon group-containing naphthols and the unsaturated hydrocarbon group-containing styrenes are similarly described.

The terpene compound refers to a hydrocarbon represented by the compositional formula $(C_5H_8)_n$ or an oxygen-

containing derivative thereof, each of which has a terpene basic skeleton and is classified into monoterpenes ($C_{10}H_{16}$), sesquiterpenes ($C_{15}H_{24}$), diterpenes ($C_{20}H_{32}$), and other terpenes. The terpene compound is not particularly limited but is preferably a cyclic unsaturated hydrocarbon. The terpene compound is also preferably free of a hydroxyl group.

Specific examples of the terpene compound include α-pinene, β-pinene, 3-carene (δ-3-carene), dipentene, limonene, myrcene, alloocimene, ocimene, α-phellandrene, α-terpinene, γ-terpinene, terpinolene, 1,8-cineole, 1,4-cineole, α-terpineol, β-terpineol, and γ-terpineol. Preferred among these are α-pinene, β-pinene, 3-carene (δ-3-carene), dipentene, and limonene, with α-pinene or limonene being more preferred, because they allow for a balanced improvement in grip performance, blowing resistance, fuel economy, and durability. The limonene may include any of d-, 1-, and dl-limonenes.

These terpene compounds may be used alone, or two or more of these may be used in combination.

Examples of the terpene aromatic resins produced, for example, by copolymerization of styrene derivatives with limonene include compounds represented by the following formula (I) :

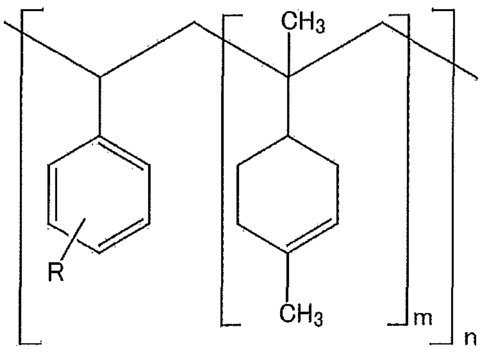

(I)

wherein R, which is a substituent on the aromatic ring, represents a C1-C20 alkyl group, a C1-C20 alkoxy group, or a C2-C20 unsaturated hydrocarbon group, provided that the number of substituents R may be 1 to 5, and when the number of substituents is two or more, the substituents may be the same as or different from each other and may also be located in any position; m is 0.2 to 20; and n is 2 to 10.

Specific examples of the terpene aromatic resin include YS resin TO125 available from Yasuhara Chemical Co., Ltd.

The hydrogenated terpene aromatic resin in the present invention may be produced by hydrogenating the double bonds of the above-described terpene aromatic resin by a usual method. The hydrogenation may be carried out by, for example, catalytic hydrogen reduction using, as a catalyst, a noble metal such as palladium, ruthenium, rhodium, or nickel, either alone or supported on a carrier such as activated carbon, activated alumina, or diatomaceous earth.

The amount of the catalyst per 100% by mass of the starting terpene aromatic resin is preferably 0.1% to 50% by mass, more preferably 0.2% to 40% by mass. When the amount of the catalyst is less than 0.1% by mass, the hydrogenation reaction tends to slow down, while when the amount is more than 50% by mass, the catalyst may be left as an impurity which can act as an obstacle to filler dispersion or polymer dispersion, resulting in insufficient tensile strength or grip performance. The hydrogen pressure of the hydrogenation reaction is typically 5 to 200 kg/cm$^2$, preferably 50 to 100 kg/cm$^2$. If the hydrogen pressure is less than 5 kg/cm$^2$, the rate of the hydrogenation reaction tends to slow down, while if the hydrogen pressure is more than 200 kg/cm$^2$, the reaction equipment may be damaged or become difficult to maintain, resulting in poor productivity. Moreover, the temperature of the hydrogenation reaction is typically 10°C to 200°C, preferably 20°C to 150°C. If the reaction temperature is less than 10°C, the hydrogenation reaction tends to slow down, while if the reaction temperature is more than 200°C, the reaction equipment may be damaged or become difficult to maintain, resulting in poor productivity.

The hydrogenated terpene aromatic resin may be a commercial product such as YS polyster M125 available from Yasuhara Chemical Co., Ltd.

The hydrogenated terpene aromatic resin in the present invention prepared as above contains hydrogenated double bonds.

The hydrogenated terpene aromatic resin has a degree of hydrogenation of double bonds of 5% to 100%. In particular, the degree of hydrogenation of double bonds is preferably 6% or more, more preferably 7% or more, still more preferably 8% or more, further preferably 11% or more, particularly preferably 15% or more. The upper limit of the degree of hydrogenation of double bonds is not precisely defined at present because its preferred range may change due to factors related to hydrogenation reactions, such as advances in production technology (e.g. heating and pressurizing conditions, catalysts), or improvements in productivity. Under the current circumstances, the upper limit is preferably, for example, 80% or less, more preferably 60% or less, still more preferably 40% or less, further preferably 30% or less,

particularly preferably 25% or less. If the degree of hydrogenation is less than 5%, grip performance (especially stable grip performance during the middle and late periods of running), blowing resistance, or fuel economy tends to be insufficient.

The degree of hydrogenation (hydrogenation ratio) is calculated from the integrals of the double bond peaks determined by $^1$H-NMR (proton NMR) according to the equation below. The degree of hydrogenation (hydrogenation ratio) herein refers to the percentage of hydrogenated double bonds.

$$(\text{Hydrogenation ratio } (\%)) = ((A - B)/A) \times 100$$

where A: the integral of the double bond peaks before hydrogenation;
B: the integral of the double bond peaks after hydrogenation.

For example, when the terpene aromatic resin used is a compound of formula (I) obtained by copolymerization of a styrene derivative and limonene, if the degree of hydrogenation is set to 100%, then a hydrogenated terpene aromatic resin represented by the formula (II) below will be obtained, while if the degree of hydrogenation is at least 5% but less than 100%, then, for example, a hydrogenated terpene aromatic resin represented by the formula (III) below will be obtained.

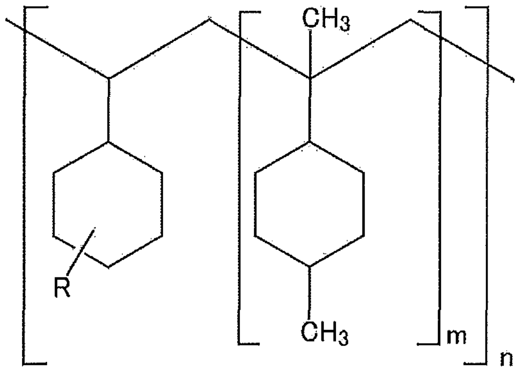
(II)

In formula (II), R, which is a substituent on the cyclohexane ring, represents a C1-C20 alkyl group, a C1-C20 alkoxy group, or a C2-C20 unsaturated hydrocarbon group, provided that the number of substituents R may be 1 to 5, and when the number of substituents is two or more, the substituents may be the same as or different from each other and may also be located in any position; m is 0.2 to 20; and n is 2 to 10.

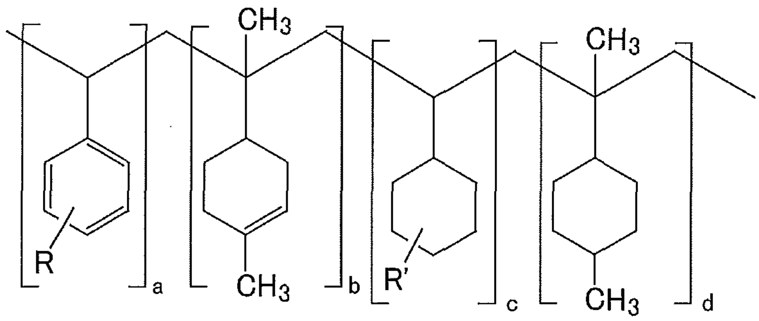
(III)

In formula (III), R, which is a substituent on the aromatic ring, represents a C1-C20 alkyl group, a C1-C20 alkoxy group, or a C2-C20 unsaturated hydrocarbon group, and R', which is a substituent on the cyclohexane ring, represents a C1-C20 alkyl group, a C1-C20 alkoxy group, or a C2-C20 unsaturated hydrocarbon group, provided that the number of substituents R or R' may be 1 to 5, and when the number of substituents is two or more, the substituents may be the same as or different from each other and may also be located in any position; a, b, c, and d represent the numbers of repeating units, and the repeating units may be linked in any order and may be arranged in blocks, alternately, or randomly.

Preferred embodiments of the hydrogenated terpene aromatic resin may also be described as, for example, resins containing repeating units of formula (II) containing a cyclohexyl group, provided that the resins may contain in the structure at least one repeating unit selected from the group consisting of repeating units of formula (I) and repeating

units represented by the formula (IV) below. The repeating units may be linked in any order and may be arranged in blocks, alternately, or randomly.

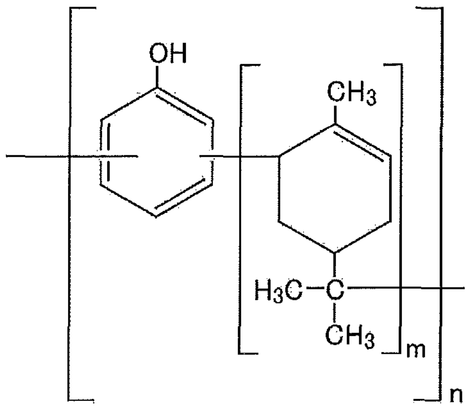

(IV)

In formula (IV), m and n represent the numbers of repeating units.

The hydroxyl value of the hydrogenated terpene aromatic resin (i.e., corresponding to the phenol group content) is 20 mg KOH/g or less, preferably 10 mg KOH/g or less, more preferably 5 mg KOH/g or less, still more preferably 1 mg KOH/g or less, further preferably 0.1 mg KOH/g or less. Especially preferably, it is 0 mg KOH/g. If the hydroxyl value is more than 20 mg KOH/g, the resin may show increased self-aggregation and thus reduced affinity for rubber and filler, thereby failing to provide sufficient grip performance.

The hydroxyl value of the hydrogenated terpene aromatic resin refers to the amount of potassium hydroxide in milligrams required to neutralize the acetic acid which combines with hydroxyl groups on acetylation of 1 g of the hydrogenated terpene aromatic resin, and is measured by potentiometric titration (JIS K 0070:1992).

The hydrogenated terpene aromatic resin preferably has a softening point of 80°C or higher, more preferably 90°C or higher, still more preferably 100°C or higher, further preferably 114°C or higher. In view of stable grip performance during the middle and late periods of running, the softening point is particularly preferably 116°C or higher, most preferably 120°C or higher. The softening point is also preferably 180°C or lower, more preferably 170°C or lower, still more preferably 165°C or lower, particularly preferably 160°C or lower, most preferably 135°C or lower. A hydrogenated terpene aromatic resin having a softening point of lower than 80°C tends to disperse well in rubber but to reduce grip performance, while a hydrogenated terpene aromatic resin having a softening point of higher than 180°C tends to disperse poorly, thereby failing to provide sufficient grip performance, and also tends not to provide good durability.

The softening point of the hydrogenated terpene aromatic resin is determined in accordance with JIS K 6220-1:2001 using a ring and ball softening point measuring apparatus and is defined as the temperature at which the ball drops down.

The hydrogenated terpene aromatic resin preferably has a glass transition temperature (Tg) of 20°C or higher, more preferably 30°C or higher, still more preferably 40°C or higher. The Tg is also preferably 100°C or lower, more preferably 90°C or lower, still more preferably 80°C or lower.

Herein, the glass transition temperature of the hydrogenated terpene aromatic resin is measured by differential scanning calorimetry (DSC) at a rate of temperature rise of 10°C/min in accordance with JIS K 7121.

The weight average molecular weight (Mw) of the hydrogenated terpene aromatic resin is not particularly limited, but is preferably 300 to 3,000, more preferably 500 to 2,000, still more preferably 600 to 2,000. When the Mw is less than 300, the G' value (hardness) of the adhesive layer tends to be low, leading to insufficient grip performance, while when the Mw is more than 3,000, rubber hardness tends to increase, resulting in insufficient grip performance or blowing resistance. Herein, the weight average molecular weight of the hydrogenated terpene aromatic resin can be determined by gel permeation chromatography (GPC) (GPC-8000 series available from Tosoh Corporation, detector: differential refractometer, column: TSKGEL SUPERMALTPORE HZ-M available from Tosoh Corporation) calibrated with polystyrene standards.

The rubber composition in the present invention contains the hydrogenated terpene aromatic resin in an amount of 1 to 50 parts by mass per 100 parts by mass of the diene rubber. The amount of the hydrogenated terpene aromatic resin is preferably 2 parts by mass or more, more preferably 3 parts by mass or more, still more preferably 5 parts by mass or more. The amount is also preferably 40 parts by mass or less, more preferably 35 parts by mass or less, still more preferably 30 parts by mass or less. If the amount is less than 1 part by mass, grip performance or blowing resistance tends to decrease. If it is more than 50 parts by mass, rubber hardness tends to increase, resulting in a failure to achieve grip performance during the initial period of running. Additionally, blowing resistance also tends to decrease.

In the present invention, the difference in solubility parameter (SP value) between the diene rubber and the

hydrogenated terpene aromatic resin is preferably 1.5 or less. When the difference in SP value is within the above range, the compatibility between the diene rubber and the hydrogenated terpene aromatic resin becomes better, resulting in further improvements in grip performance, blowing resistance, fuel economy, and durability. The difference in SP value is more preferably 1.0 or less. The lower limit of the difference in SP value is not particularly limited, but a smaller difference is more preferred.

The SP values of the diene rubber and the hydrogenated terpene aromatic resin mean solubility parameters calculated by Hoy's method according to the structure of the compounds. The Hoy's calculation is described in, for example, K.L.Hoy, "Table of Solubility Parameters", Solvent and Coatings Materials Research and Development Department, Union Carbites Corp. (1985).

The rubber composition in the present invention preferably contains carbon black in view of reinforcement, grip performance, and abrasion resistance, and wet silica in view of fuel economy and wet grip performance.

The carbon black preferably has a nitrogen adsorption specific surface area ($N_2SA$) of 100 $m^2/g$ or more, more preferably 110 $m^2/g$ or more, still more preferably 115 $m^2/g$ or more, particularly preferably 140 $m^2/g$ or more. The $N_2SA$ is also preferably 600 $m^2/g$ or less, more preferably 500 $m^2/g$ or less, still more preferably 400 $m^2/g$ or less. When it is less than 100 $m^2/g$, grip performance tends to decrease. When it is more than 600 $m^2/g$, good filler dispersion tends not to be easily achieved, resulting in a decrease in reinforcement. The $N_2SA$ of the carbon black is determined by the BET method in conformity with JIS K 6217-2:2001.

The amount of carbon black varies depending on the desired grip performance, abrasion resistance, or fuel economy of the tire. In order to prevent UV-induced cracking, the amount of carbon black per 100 parts by mass of the diene rubber is desirably 5 parts by mass or more. When silica is used to ensure wet grip performance, the amount of carbon black per 100 parts by mass of the diene rubber is about 5 to 50 parts by mass. When carbon black is used to ensure dry grip performance and abrasion resistance, the amount of carbon black per 100 parts by mass of the diene rubber is preferably 50 to 160 parts by mass.

The rubber composition in the present invention preferably contains at least one inorganic filler selected from the group consisting of compounds represented by the formula below, magnesium sulfate, and silicon carbide. This can further improve initial grip performance and stable grip performance during the middle and late periods of running.

$$mM \cdot xSiO_y \cdot zH_2O$$

In the formula, M represents at least one metal selected from the group consisting of Al, Mg, Ti, Ca, and Zr, or an oxide or hydroxide of the metal; m represents an integer of 1 to 5; x represents an integer of 0 to 10; y represents an integer of 2 to 5; and z represents an integer of 0 to 10.

Examples of the compounds of the above formula include alumina, alumina hydrate, aluminum hydroxide, magnesium hydroxide, magnesium oxide, talc, titanium white, titanium black, calcium oxide, calcium hydroxide, magnesium aluminum oxide, clay, pyrophyllite, bentonite, aluminum silicate, magnesium silicate, calcium silicate, calcium aluminum silicate, magnesium silicate, zirconium, and zirconium oxide. These inorganic compounds may be used alone, or two or more of these may be used in combination.

Preferred are inorganic fillers in which M is Al or Zr metal or an oxide or hydroxide of the metal because they have a Mohs hardness of 3 or more and show water resistance and oil resistance, and they, when processed into micron-sized particles, produce a scratching effect or they promote blooming of adhesive components which provide grip performance, thereby improving grip performance, and also because they provide good processability, economic efficiency, and blowing resistance. More preferred is aluminum hydroxide or zirconium oxide because they are abundant resources and inexpensive. Aluminum hydroxide is particularly preferred as it further provides good kneading productivity and good extrusion processability.

The inorganic filler preferably has a nitrogen adsorption specific surface area ($N_2SA$) of 5 to 120 $m^2/g$. When the $N_2SA$ is outside the above range, grip performance and abrasion resistance may deteriorate. The lower limit of the $N_2SA$ is more preferably 10 $m^2/g$, while the upper limit of the $N_2SA$ is more preferably 115 $m^2/g$, still more preferably 110 $m^2/g$.

The $N_2SA$ of the inorganic filler is determined by the BET method in conformity with ASTM D3037-81.

The inorganic filler preferably has an average particle size of 1.5 $\mu m$ or less, more preferably 0.69 $\mu m$ or less, still more preferably 0.6 $\mu m$ or less. The average particle size is also preferably 0.2 $\mu m$ or more, more preferably 0.25 $\mu m$ or more, still more preferably 0.4 $\mu m$ or more. When it is more than 1.5 $\mu m$, grip performance and blowing resistance may decrease. The inorganic filler having an average particle size of less than 0.2 $\mu m$ may easily form secondary aggregates in rubber, adversely resulting in a decrease in grip performance or blowing resistance.

The average particle size of the inorganic filler refers to a number average particle size as measured with a transmission electron microscope.

In order to ensure grip performance and blowing resistance of tires and to reduce metal wear of Banbury mixers and extruders, the inorganic filler preferably has a Mohs hardness of 7, which is equal to that of silica, or less than 7,

more preferably of 2 to 5.

Mohs hardness, which is one of the mechanical properties of materials, is a measure commonly used through the ages in mineral-related fields. Mohs hardness is measured by scratching a material (e.g. aluminum hydroxide) to be analyzed for hardness with a reference material followed by checking for the presence of scratches.

In particular, it is preferred to use an inorganic filler which has a Mohs hardness of less than 7 and whose dehydration product has a Mohs hardness of 8 or more. For example, the use of aluminum hydroxide, which has a Mohs hardness of about 3, allows for the prevention of abrasion (wear) of Banbury mixers and rolls. In addition, the outer surface layer of aluminum hydroxide undergoes a dehydration reaction (transition) due to vibration or heat build-up during the middle and late periods of running and partially due to kneading and is thereby converted to alumina having a Mohs hardness of about 9, which is equal to or harder than that of the stones on the road, with the result that excellent grip performance and blowing resistance can be obtained. The internal aluminum hydroxide needs not to be entirely converted, and its partial conversion can provide the effect of scratching the road surface. Furthermore, aluminum hydroxide and alumina are stable to water, bases, and acids, and neither inhibit cure nor promote oxidative degradation. The inorganic filler after the transition more preferably has a Mohs hardness of 7 or more, with no upper limitation. Diamond has the highest hardness of 10.

The inorganic filler preferably has a thermal decomposition onset temperature (DSC endothermic onset temperature) of 160°C to 500°C, more preferably 170°C to 400°C. With a thermal decomposition onset temperature of lower than 160°C, the inorganic filler may be excessively thermally decomposed or reaggregated during kneading, so that the metal of the kneader rotor blades, the vessel wall, or the like may be excessively worn. The thermal decomposition onset temperature of the inorganic filler is determined by differential scanning calorimetry (DSC). The thermal decomposition includes dehydration reactions.

The inorganic filler may be a commercial product having the $N_2SA$ range indicated above, or may also be, for example, an inorganic filler having been processed into particles with the above properties by grinding or other treatments. The grinding treatment may be carried out by conventional methods, such as wet grinding or dry grinding using, for example, a jet mill, a current jet mill, a counter jet mill, or a contraplex mill.

If necessary, an inorganic filler having a predetermined $N_2SA$ may be prepared by fractionation by a membrane filtering method widely employed in the medical or biotechnology fields, before use as a compounding agent for rubber.

The amount of the inorganic filler per 100 parts by mass of the diene rubber is preferably 1 part by mass or more, more preferably 3 parts by mass or more, still more preferably 5 parts by mass or more. With less than 1 part by mass of the inorganic filler, sufficient grip performance may not be obtained. The amount is also preferably 70 parts by mass or less, more preferably 65 parts by mass or less, still more preferably 60 parts by mass or less, particularly preferably 20 parts by mass or less. With more than 70 parts by mass of the inorganic filler, blowing resistance may deteriorate.

The rubber composition in the present invention may contain reinforcing fillers conventionally used in rubber compositions for tires, such as silica or calcium carbonate.

In a suitable embodiment of the present invention, the rubber composition in the present invention may further contain a softener in view of initial grip performance, stable grip performance during the middle and late periods of running, and other properties. Any softener may be used, including oils, liquid diene polymers, and resins having a softening point of 160°C or lower. In particular, the softener particularly preferably includes a resin having a softening point of 160°C or lower, most preferably a combination of an oil, a liquid diene polymer, and a resin having a softening point of 160°C or lower.

Examples of the oil include process oils such as paraffinic process oils, aromatic process oils, and naphthenic process oils. In particular, preferred are oils having a smaller difference in solubility parameter (SP value) from the diene rubber. Oils having a smaller difference in SP value are miscible better with the diene rubber. The difference in SP value is preferably, for example, 1.0 or less. The lower limit of the difference in SP value is not particularly limited, but a smaller difference is more preferred.

The SP value of the oil is determined as described for the diene rubber and the hydrogenated terpene aromatic resin.

When an oil is incorporated, the amount of the oil per 100 parts by mass of the diene rubber is preferably 2 parts by mass or more, more preferably 5 parts by mass or more, though it varies depending on the desired grip performance and fuel economy of the tire, or in other words the filler content. The amount of the oil is also preferably 85 parts by mass or less, more preferably 75 parts by mass or less. With less than 2 parts by mass of the oil, poor dispersion of fillers, polymers, or crosslinking agents such as sulfur may occur. With more than 85 parts by mass of the oil, durability, blowing resistance, or abrasion resistance tends to deteriorate.

As used herein, the amount of the oil includes the amount of the oil contained in oil extended rubber.

It should be noted that tires for trucks and buses, which require high abrasion resistance, durability, and chip resistance, often incorporate no oil.

The term "liquid diene polymer" refers to a diene polymer that is in the liquid state at a room temperature (25°C).

The liquid diene polymer preferably has a polystyrene-equivalent weight average molecular weight (Mw) of 1.0 $\times 10^3$ to 2.0 $\times 10^5$, more preferably 3.0 $\times 10^3$ to 1.5 $\times 10^4$, as determined by gel permeation chromatography (GPC) . A liquid diene polymer having a Mw of less than 1.0 $\times 10^3$ may not be effective in improving grip performance and may fail to ensure sufficient durability, while a liquid diene polymer having a Mw of more than 2.0 $\times 10^5$ may form an excessively viscous polymer solution, resulting in deterioration of productivity, or may reduce breaking properties.

The Mw of the liquid diene polymer as used herein is determined by gel permeation chromatography (GPC) calibrated with polystyrene standards.

Examples of the liquid diene polymer include liquid styrene-butadiene copolymers (liquid SBR), liquid polybutadienes (liquid BR), liquid polyisoprenes (liquid IR), and liquid styrene-isoprene copolymers (liquid SIR). Preferred among these is liquid SBR because a good balance of blowing resistance and stable grip performance during the middle and late periods of running can be obtained.

When a liquid diene polymer is incorporated, the amount of the liquid diene polymer per 100 parts by mass of the diene rubber is preferably 5 parts by mass or more, more preferably 10 parts by mass or more, still more preferably 20 parts by mass or more, particularly preferably 30 parts by mass or more. The amount is also preferably 120 parts by mass or less, more preferably 80 parts by mass or less, still more preferably 70 parts by mass or less. With less than 5 parts by mass of the liquid diene polymer, sufficient grip performance tends not to be obtained. With more than 120 parts by mass of the liquid diene polymer, blowing resistance tends to deteriorate.

Examples of resins having a softening point of 160°C or lower that can be used in combination with the hydrogenated terpene aromatic resin in the present invention include coumarone-indene resins, p-t-butylphenol acetylene resins, and styrene-acrylic resins.

The term "coumarone-indene resin" refers to a resin containing coumarone and indene as monomer components forming the backbone (main chain) of the resin. The backbone of the resin may contain, in addition to coumarone and indene, monomer components such as styrene, $\alpha$-methylstyrene, methylindene, or vinyltoluene.

The coumarone-indene resin has a softening point of -20°C to 160°C. The upper limit of the softening point is preferably 145°C or lower, more preferably 130°C or lower. The lower limit is preferably -10°C or higher, more preferably -5°C or higher. A coumarone-indene resin having a softening point of higher than 160°C tends to exhibit poor dispersibility during kneading, resulting in deterioration of fuel economy. A coumarone-indene resin having a softening point of less than -20°C is difficult to produce, and it is also more likely to migrate to other components and to volatilize, which may result in changes in properties during use.

When the coumarone-indene resin used has a softening point of 90°C to 140°C, grip performance is improved. The coumarone-indene resin particularly having a softening point of 100°C to 120°C can overall increase tan$\delta$ over a range of 0°C to 80°C, and also provides good elongation at break.

When the coumarone-indene resin used has a softening point of 10°C to 30°C, it provides good grip performance at relatively low temperatures between 10°C to 40°C, and overall reduces tan$\delta$. Such a coumarone-indene resin having a softening point of 10°C to 30°C may be used mainly to improve elongation at break.

The reason why elongation at break is improved by the use of the coumarone-indene resin is probably that the coumarone-indene resin imparts moderate sliding properties to the crosslinked polymer chains, allowing for their uniform elongation.

The softening point of the coumarone-indene resin as used herein is determined in accordance with JIS K 6220-1:2001 using a ring and ball softening point measuring apparatus and is defined as the temperature at which the ball drops down.

The p-t-butylphenol acetylene resin may be a resin obtained by condensation of p-t-butylphenol and acetylene. The resin preferably has a softening point of 120°C to 160°C (e.g., Koresin having a softening point of 145°C). The incorporation of such a p-t-butylphenol acetylene resin improves grip performance particularly at high temperatures (approximately 80 to 120°C). The combined use of Koresin with an $\alpha$-methylstyrene-based resin having a softening point of approximately 85°C, which provides excellent grip performance at low temperatures (10 to 40°C), can improve grip performance at tire running temperatures between 20°C and 120°C.

The softening point of the p-t-butylphenol acetylene resin can be determined as described for the coumarone-indene resin.

The p-t-butylphenol acetylene resin preferably has a hydroxyl value of 100 mg KOH/g or more, more preferably 150 mg KOH/g or more, still more preferably 175 mg KOH/g or more. The hydroxyl value is also preferably 300 mg KOH/g or less, more preferably 250 mg KOH/g or less, still more preferably 200 mg KOH/g or less.

The hydroxyl value of the p-t-butylphenol acetylene resin can be determined as described for the hydrogenated terpene aromatic resin.

The rubber composition in the present invention may appropriately contain, in addition to the above-described components, compounding agents commonly used in the tire industry, such as waxes, zinc oxide, stearic acid, releasing agents, antioxidants, vulcanizing agents, e.g. sulfur, and vulcanization accelerators.

Any zinc oxide may be used in the present invention, including, for example, those used in the rubber field such

as in tires. For better dispersion of zinc oxide and higher abrasion resistance, the zinc oxide may suitably be finely divided zinc oxide. Specifically, the zinc oxide preferably has an average primary particle size of 200 nm or less, more preferably 100 nm or less. The lower limit of the average primary particle size is not particularly limited, but is preferably 20 nm or more, more preferably 30 nm or more.

The average primary particle size of the zinc oxide refers to an average particle size (average primary particle size) calculated from the specific surface area determined by the BET method based on nitrogen adsorption. The zinc oxide preferably has a specific surface area ($N_2SA$) of 10 to 50 $m^2/g$ as determined by the BET method based on nitrogen adsorption.

When zinc oxide is incorporated, the amount of zinc oxide per 100 parts by mass of the diene rubber is preferably 0.5 to 10 parts by mass, more preferably 1 to 5 parts by mass. When the amount of zinc oxide is within the range indicated above, the effects of the present invention can be more suitably achieved.

Examples of vulcanization accelerators that can be used in the present invention include sulfenamide vulcanization accelerators, thiazole vulcanization accelerators, thiuram vulcanization accelerators, guanidine vulcanization accelerators, and dithiocarbamate vulcanization accelerators. These vulcanization accelerators may be used alone, or two or more of these may be used in combination. Among these, suitable in the present invention are sulfenamide, thiuram, guanidine, and dithiocarbamate vulcanization accelerators, with sulfenamide vulcanization accelerators being particularly preferred.

Examples of sulfenamide vulcanization accelerators include N-tert-butyl-2-benzothiazolylsulfenamide (TBBS), N-cyclohexyl-2-benzothiazolylsulfenamide (CBS), and N,N-dicyclohexyl-2-benzothiazolylsulfenamide (DCBS).

Examples of thiuram vulcanization accelerators include tetramethylthiuram disulfide (TMTD), tetrabenzylthiuram disulfide (TBzTD), and tetrakis(2-ethylhexyl)thiuram disulfide (TOT-N).

Examples of guanidine vulcanization accelerators include diphenylguanidine (DPG), diorthotolylguanidine, and orthotolylbiguanidine.

Examples of dithiocarbamate vulcanization accelerators include zinc dibenzyldithiocarbamate (ZTC) and zinc ethylphenyldithiocarbamate (PX).

When a vulcanization accelerator is incorporated, the amount of the vulcanization accelerator per 100 parts by mass of the diene rubber is preferably 1 part by mass or more, more preferably 2 parts by mass or more, but preferably 15 parts by mass or less, more preferably 10 parts by mass or less. An amount of less than 1 part by mass tends not to provide a sufficient cure rate, resulting in a failure to achieve good grip performance or blowing resistance. An amount of more than 15 parts by mass may lead to excessively tight crosslink density or blooming, resulting in a decrease in grip performance, blowing resistance, or building tack.

The rubber composition in the present invention may also contain zinc dithiophosphate.

Zinc dithiophosphate is a compound represented by the formula (1) below. The zinc dithiophosphate has a zinc atom at the center of the structure and produces a higher cure accelerating effect than zinc oxide. With the use of zinc dithiophosphate, the occurrence of blowing during high-temperature running can be sufficiently reduced even in a composition with a high total amount of all components which incorporates at least a certain amount of carbon black or softeners with a rubber component including a diene rubber. The use of zinc dithiophosphate also allows for sufficient crosslinking without using zinc oxide or diphenylguanidine (DPG). Moreover, the use of zinc dithiophosphate greatly improves the temperature dependence of hardness between 23°C to 100°C. The temperature dependence of hardness is very important from the early to late stages of a race in order to ensure stable micro-deformation conformity to the irregularities of the road surface, i.e. road surface grip performance, and high-speed stability.

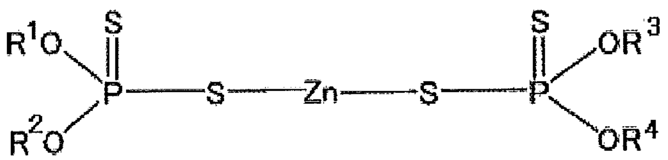
(1)

In formula (1), each of $R^1$ to $R^4$ independently represents a C1-C18 linear or branched alkyl group, or a C5-C12 cycloalkyl group.

Examples of the zinc dithiophosphate to be used include TP-50, ZBOP-S, and ZBOP-50 all available from Rhein Chemie, and compounds similar to these products (e.g. compounds of formula (1) in which $R^1$ to $R^4$ are n-propyl, isopropyl, or n-octyl groups) .

When zinc dithiophosphate is incorporated, the amount of zinc dithiophosphate (amount of the active ingredient) per 100 parts by mass of the diene rubber is preferably 0.2 parts by mass or more, more preferably 0.5 parts by mass or more, still more preferably 1 part by mass or more, particularly preferably 3 parts by mass or more. An amount of less than 0.2 parts by mass of zinc dithiophosphate may not be effective in preventing blowing during high-temperature running. The amount of zinc dithiophosphate is also preferably 15 parts by mass or less, more preferably 10 parts by

mass or less, still more preferably 8 parts by mass or less. With more than 15 parts by mass of zinc dithiophosphate, the effect of improving blowing resistance tends to be saturated, while scorch time tends to decrease, resulting in deterioration of processability.

As described earlier, in another suitable embodiment of the present invention, the amount of zinc oxide in the rubber composition containing zinc dithiophosphate is 2 parts by mass or less, more preferably zero, per 100 parts by mass of the diene rubber.

The effects of the hydrogenated terpene aromatic resin according to the present invention are not reduced by the total amount of all components (total PHR) of the rubber composition in the present invention. In the case of a formulation with a high total PHR, or in other words a formulation designed for high grip performance with a tendency toward reduction in opposing blowing resistance, the use of the hydrogenated terpene aromatic resin is more effective. This is because since a predetermined amount of the hydrogenated terpene aromatic resin contained in the rubber composition in the present invention promotes the crosslinking of rubber, without adsorbing the sulfur of the crosslinking agent, to produce uniform and tight crosslinking between rubber polymers, uniform and tight crosslinking of rubber can be produced even in the rubber composition having a formulation with a high total amount of all components, and therefore the effects of the present invention are more significant in the rubber composition having a higher total amount of all components. In a formulation with high grip performance and a tendency toward reduced blowing resistance, the total amount of all components is preferably 270% by mass or more, more preferably 300% by mass or more, still more preferably 350% by mass or more. The total amount is also preferably 500% by mass or less, more preferably 450% by mass or less, still more preferably 400% by mass or less.

The rubber composition for treads in the present invention can be prepared by conventional methods.

For example, first, components excluding sulfur and vulcanization accelerators are incorporated (added) and kneaded in a rubber kneading machine such as a Banbury mixer or open roll mill to obtain a kneadate (base kneading step). Subsequently, the sulfur and vulcanization accelerators are further incorporated with (added to) the kneadate and kneaded, followed by vulcanization, whereby the rubber composition can be prepared.

The base kneading step is not particularly limited as long as the rubber component including a diene rubber and other components are kneaded. The base kneading step may be carried out in a single step or may be divided into two steps where the rubber component is previously kneaded with some components including the hydrogenated terpene aromatic resin, and then the kneadate is kneaded with the other components, excluding sulfur and vulcanization accelerators.

The rubber composition is suitable for treads of pneumatic tires, especially cap treads of high performance car tires.

The pneumatic tire of the present invention can be formed from the above-described rubber composition by usual methods.

Specifically, the rubber composition containing the components described above, before vulcanization, is extruded and processed into the shape of a tread and then assembled with other tire components on a tire building machine in a usual manner to build an unvulcanized tire. The unvulcanized tire is heat pressed in a vulcanizer to produce a tire.

The pneumatic tire of the present invention can be used in, for example, passenger vehicles, trucks and buses, sports cars, two-wheeled vehicles, or racing vehicles, and is suitable especially as a high performance tire. In the present invention, the term "high performance tire" refers to a tire that is excellent particularly in grip performance, especially dry grip performance, and conceptually includes racing tires intended to be used in racing vehicles. Such a racing tire can be suitably used as a racing tire for races or other events, and especially as a dry racing tire to be used on dry roads.

## EXAMPLES

The present invention will be specifically described below with reference to, but not limited to, examples.

The chemicals used in the examples and comparative examples are listed below.

<SBR>

Tufdene 4850: Tufdene 4850 (S-SBR, oil extended [oil content: 50 parts by mass per 100 parts by mass of rubber solids], styrene content: 40% by mass, vinyl content: 46% by mass, glass transition temperature: -27°C, weight average molecular weight: 940,000, SP value: 8.55) available from Asahi Kasei Corporation

N9548: Nipol 9548 (E-SBR, oil extended [oil content: 37.5 parts by mass per 100 parts by mass of rubber solids], styrene content: 35% by mass, vinyl content: 18% by mass, glass transition temperature: -40°C, weight average molecular weight: 1,090,000, SP value: 8.50) available from Zeon Corporation

NS612: Nipol NS612 (S-SBR, non-oil extended, styrene content: 15% by mass, vinyl content: 30% by mass, glass

transition temperature: -65°C, weight average molecular weight: 780,000, SP value: 8.40) available from Zeon Corporation

<NR>

TSR20 (SP value: 8.10)

<BR>

CB25: BUNA-CB25 (rare earth-catalyzed BR synthesized using a Nd catalyst, vinyl content: 0.7% by mass, cis content: 97% by mass, glass transition temperature: -110°C, SP value: 8.20) available from Lanxess

<Carbon black>

HP180: HP180 ($N_2SA$: 175 $m^2/g$) available from Orion Engineered Carbons
N220: SHOBLACK N220 ($N_2SA$: 114 $m^2/g$) available from Cabot Japan K.K.

<Silica>

VN3: ULTRASIL VN3 ($N_2SA$: 175 $m^2/g$) available from Evonik

<Aluminum hydroxide>

Aluminum hydroxide 1: a dry ground product of ATH#B (average particle size: 0.5 $\mu$m, $N_2SA$: 95 $m^2/g$, Mohs hardness: 3, Mohs hardness of its pyrolysate (alumina): 9, thermal decomposition onset temperature: 200°C) available from Sumitomo Chemical Co., Ltd.
Aluminum hydroxide 2: ATH#B (average particle size: 0.6 $\mu$m, $N_2SA$: 15 $m^2/g$, Mohs hardness: 3, Mohs hardness of its pyrolysate (alumina): 9, thermal decomposition onset temperature: 200°C) available from Sumitomo Chemical Co., Ltd.
Aluminum hydroxide 3: HIGILITE H-43 (average particle size: 0.75 $\mu$m, $N_2SA$: 7 $m^2/g$, Mohs hardness: 3, Mohs hardness of its pyrolysate (alumina): 9, thermal decomposition onset temperature: 200°C) available from Showa Denko K.K.

<Terpene-based resin>

M125: YS Polyster M125 (degree of hydrogenation: 11%, softening point: 123°C, Tg: 69°C, hydroxyl value: 0 mg KOH/g, SP value: 8.52) available from Yasuhara Chemical Co., Ltd.
M115: YS Polyster M115 (degree of hydrogenation: 12%, softening point: 115°C, Tg: 59°C, hydroxyl value: 0 mg KOH/g, SP value: 8.52) available from Yasuhara Chemical Co., Ltd.
M105: YS Polyster M105 (degree of hydrogenation: 12%, softening point: 105°C, Tg: 48°C, hydroxyl value: 0 mg KOH/g, SP value: 8.52) available from Yasuhara Chemical Co., Ltd.
M80: YS Polyster M80 (degree of hydrogenation: 12%, softening point: 80°C, Tg: 23°C, hydroxyl value: 0 mg KOH/g, SP value: 8.52) available from Yasuhara Chemical Co., Ltd.

Resins 1 to 5: resins produced as described below

TO125: YS resin TO125 (aromatic modified terpene resin, degree of hydrogenation: 0%, softening point: 125°C, Tg: 64°C, hydroxyl value: 0 mg KOH/g, SP value: 8.73) available from Yasuhara Chemical Co., Ltd.
TO115: YS resin TO115 (aromatic modified terpene resin, degree of hydrogenation: 0%, softening point: 115°C, Tg: 54°C, hydroxyl value: 0 mg KOH/g, SP value: 8.73) available from Yasuhara Chemical Co., Ltd.
TO105: YS resin TO105 (aromatic modified terpene resin, degree of hydrogenation: 0%, softening point: 105°C, Tg: 45°C, hydroxyl value: 0 mg KOH/g, SP value: 8.73) available from Yasuhara Chemical Co., Ltd.

TO85: YS resin TO85 (aromatic modified terpene resin, degree of hydrogenation: 0%, softening point: 85°C, Tg: 25°C, hydroxyl value: 0 mg KOH/g, SP value: 8.73) available from Yasuhara Chemical Co., Ltd.
T160: YS Polyster T160 (terpene phenol resin, degree of hydrogenation: 0%, softening point: 160°C, Tg: 100°C, hydroxyl value: 60 mg KOH/g, SP value: 8.81) available from Yasuhara Chemical Co., Ltd.
G125: YS Polyster G125 (terpene phenol resin, degree of hydrogenation: 0%, softening point: 125°C, Tg: 67°C, hydroxyl value: 140 mg KOH/g, SP value: 9.07) available from Yasuhara Chemical Co., Ltd.
TP115: Sylvares TP115 (terpene phenol resin, degree of hydrogenation: 0%, softening point: 115°C, Tg: 55°C, OH value: 50 mg KOH/g, SP value: 8.77) available from Arizona Chemical

<Petroleum-derived resin>

Koresin: dry ground Koresin (p-t-butylphenol acetylene resin [condensation resin of p-t-butylphenol and acetylene], softening point: 145°C, Tg: 98°C, hydroxyl value: 193 mg KOH/g, $N_2SA$: 4.1 $m^2/g$, SP value: 9.10) available from BASF
V-120: Nitto resin coumarone V-120 (coumarone-indene resin, softening point: 120°C, hydroxyl value: 30 mg KOH/g, SP value: 9.00) available from Nitto Chemical Co., Ltd.
SA85: SYLVARES SA85 (α-methylstyrene-based resin [copolymer of α-methylstyrene and styrene], softening point: 85°C, Tg: 43°C, hydroxyl value: 0 mg KOH/g, SP value: 9.10) available from Arizona Chemical

<Oil>

AH-24: Diana Process AH-24 (SP value: 8.05) available from Idemitsu Kosan Co., Ltd.

<Liquid diene polymer>

L-SBR-820: L-SBR-820 (liquid SBR, Mw: 10,000) available from Kuraray Co., Ltd.

<Wax>

Ozoace 355: Ozoace 355 available from Nippon Seiro Co., Ltd.

<Antioxidant>

6PPD: Antigene 6C (N-phenyl-N'-(1,3-dimethyl)-p-phenylenediamine) available from Sumitomo Chemical Co., Ltd.
TMQ: NOCRAC 224 (2,2,4-trimethyl-1,2-dihydroquinoline polymer) available from Ouchi Shinko Chemical Industrial Co., Ltd.

<Stearic acid>

Stearic acid: stearic acid "TSUBAKI" available from NOF Corporation

<Zinc oxide>

Finely divided F2: ZINCOX SUPER F2 (finely divided zinc oxide, average primary particle size: 65 nm, $N_2SA$: 20 $m^2/g$) available from HakusuiTech Co., Ltd.
Zinc oxide #2: zinc oxide #2 available from Mitsui Mining & Smelting Co., Ltd.

<Vulcanizing agent>

5% oil-containing powder sulfur: HK-200-5 available from Hosoi Chemical Industry Co., Ltd.
TP-50: zinc dithiophosphate, TP-50 (compound of formula (1) in which $R^1$ to $R^4$ are n-butyl groups, active ingredient

content: 50% by mass) available from Rhein Chemie

<Vulcanization accelerator>

TBBS: NOCCELER NS-G (N-tert-butyl-2-benzothiazolylsulfenamide) available from Ouchi Shinko Chemical Industrial Co., Ltd.

Synthesis of hydrogenated terpene aromatic resin

(Synthesis of Resin 1)

To a sufficiently nitrogen-purged 3 L autoclave equipped with a stirring blade were charged 1 L of cyclohexane, 1 L of tetrahydrofuran (THF), 200 g of a starting resin (a production lot of TO125 [YS resin TO125 available from Yasuhara Chemical Co., Ltd.] with a measured softening point of 127°C), and 10 g of 10% palladium carbon. The autoclave was purged with nitrogen and subsequently with hydrogen to a pressure of 5.0 kg/cm$^2$, followed by catalytic hydrogenation at 80°C for 0.5 hours to obtain Resin 1. The yield was almost 100%.

In order to determine the degree of hydrogenation of double bonds of Resin 1, the resin (unhydrogenated TO125 or hydrogenated Resin 1) was added at a concentration of 15% by mass to carbon tetrachloride as a solvent, the mixture was subjected to 100 MHz proton NMR, and then the degree of hydrogenation of double bonds was calculated from the decrease in the intensity of the spectrum corresponding to unsaturated bonds (hereinafter, the degree of hydrogenation was determined in the same manner) . As a result, the degree of hydrogenation of double bonds (hydrogenation ratio) of Resin 1 was found to be about 2%. The hydroxyl value (OH value), softening point, and SP value of Resin 1 were 0 mg KOH/g, 123°C, and 8.70, respectively.

(Synthesis of Resin 2)

Resin 2 was prepared as described above in "Synthesis of Resin 1", except that the catalytic hydrogenation was performed for one hour. The yield was almost 100%. The degree of hydrogenation of double bonds, hydroxyl value, softening point, and SP value of Resin 2 were found to be about 5%, 0 mg KOH/g, 123°C, and 8.68, respectively.

(Synthesis of Resin 3)

Resin 3 was prepared as described above in "Synthesis of Resin 1", except that the catalytic hydrogenation was performed for two hours. The yield was almost 100%. The degree of hydrogenation of double bonds, hydroxyl value, softening point, and SP value of Resin 3 were found to be about 8%, 0 mg KOH/g, 124°C, and 8.60, respectively.

(Synthesis of Resin 4)

Resin 4 was prepared as described above in "Synthesis of Resin 1", except that the catalytic hydrogenation was performed for four hours. The yield was almost 100%. The degree of hydrogenation of double bonds, hydroxyl value, softening point, and SP value of Resin 4 were found to be about 20%, 0 mg KOH/g, 127°C, and 8.48, respectively.

(Synthesis of Resin 5)

Resin 5 was prepared as described above in "Synthesis of Resin 1", except that the catalytic hydrogenation was performed for ten hours. The yield was almost 100%. The degree of hydrogenation of double bonds, hydroxyl value, softening point, and SP value of Resin 5 were found to be about 60%, 0 mg KOH/g, 130°C, and 8.44, respectively.

The conditions for synthesis, physical properties, and other items of Resins 1 to 5 and TO125 and M125 are summarized in the Table 1 below.

[Table 1]

| | Degree of hydrogenation (%) | SP value | Reaction time (hr) | Softening point (°C) | Yield (%) |
|---|---|---|---|---|---|
| Resin 1 | 2 | 8.70 | 0.5 | 123 | 100 |
| Resin 2 | 5 | 8.68 | 1 | 123 | 100 |
| Resin 3 | 8 | 8.60 | 2 | 124 | 100 |

(continued)

| | Degree of hydrogenation (%) | SP value | Reaction time (hr) | Softening point (°C) | Yield (%) |
|---|---|---|---|---|---|
| Resin 4 | 20 | 8.48 | 4 | 127 | 100 |
| Resin 5 | 60 | 8.44 | 10 | 130 | 100 |
| TO125 | 0 | 8.73 | (produced by the manufacturer) | 125 | - |
| M125 | 11 | 8.52 | (produced by the manufacturer) | 123 | - |

<Examples and Comparative Examples>

According to each of the formulations in Tables 2 and 3, the compounding ingredients other than the sulfur and vulcanization accelerator were kneaded for five minutes at a discharge temperature of 150°C using a 4.0 L Banbury mixer available from Kobe Steel, Ltd. To the kneadate were added the sulfur and vulcanization accelerator, and they were kneaded for four minutes at a discharge temperature of 95°C using an open roll mill to obtain an unvulcanized rubber composition.

The unvulcanized rubber composition was press-vulcanized at 160°C for 20 minutes to obtain a vulcanized rubber composition.

Separately, the unvulcanized rubber composition was formed into a tread and assembled with other tire components on a tire building machine, followed by vulcanization at 160°C for 20 minutes to obtain a test tire (tire size: 215/45R17 summer).

The vulcanized rubber compositions and test tires prepared as above were evaluated for the following items. Tables 2 and 3 show the results.

The item "softening point of terpene-based resins" was calculated from the softening points and percentages of the constituent polymers. The items "SP value of diene rubbers" and "SP value of terpene-based resins" are calculated from the SP values and percentages of the constituent polymers.

(Initial grip performance)

The test tires were mounted on a front-engine, rear-wheel-drive car of 2,000 cc displacement made in Japan. A test driver drove the car 10 laps around a test track under dry asphalt road conditions and then evaluated the stability of steering control on the second lap. The results are expressed as an index (initial grip performance index), with Comparative Example 1 set equal to 100. A higher index indicates higher initial grip performance. Index values of 105 or higher are considered good.

(Grip performance during middle and late periods of running)

The test tires were mounted on a front-engine, rear-wheel-drive car of 2,000 cc displacement made in Japan. A test driver drove the car 10 laps around a test track under dry asphalt road conditions and then compared the stability of steering control on the lap recording the best lap time with that on the final lap. The results are expressed as an index, with Comparative Example 1 set equal to 100. A higher index indicates a smaller deterioration in grip performance on dry roads during the middle and late periods of running, which means that stable grip performance during the middle and late periods of running is well achieved. Index values of 105 or higher are considered good.

(Blowing resistance)

The test tires were mounted on a front-engine, rear-wheel-drive car of 2,000 cc displacement made in Japan. The car was subjected to a 500 km long run at the Okayama International Circuit. The run was carried out under dry road conditions at a road surface temperature of 20 to 30°C.

After the run, the appearance of a cross-section of the tire was observed to determine the extent of formation of honeycomb pores at a position about 1 mm above the JLB cord in the tread to evaluate blowing resistance.

The extents of formation of honeycomb pores are expressed as an index, with Comparative Example 1 set equal to 100. A higher index indicates better blowing resistance. Index values of 100 or higher are considered good.

(Wet grip performance)

The test tires were mounted on a front-engine, rear-wheel-drive passenger car with a displacement of 2,000

cc made in Japan. A test driver drove the car 10 laps around a test track under wet asphalt road conditions and then evaluated the stability of steering control. The results are expressed as an index (wet grip performance index), with Comparative Example 15 set equal to 100. A higher index indicates higher wet grip performance. Index values of 103 or higher are considered good.

(Viscoelastic test)

The loss tangent (tanδ) of each vulcanized rubber composition was measured using a viscoelastic spectrometer VES (available from Iwamoto Seisakusho Co., Ltd.) at a temperature of 70°C, a frequency of 10 Hz, an initial strain of 10%, and a dynamic strain of 2%. The reciprocals of the tanδ values are expressed as an index (fuel economy index), with Comparative Example 15 set equal to 100. A higher index indicates a smaller rolling resistance, which means that the tire has better fuel economy. Index values of 100 or higher are considered good.

(Tensile test)

No. 3 dumbbell-shaped test pieces prepared from each vulcanized rubber composition were subjected to a tensile test at room temperature in accordance with JIS K 6251 "Rubber, vulcanized or thermoplastic - Determination of tensile stress-strain properties" to measure the elongation at break EB (%). The EB values are expressed as an index, with Comparative Example 15 set equal to 100. A higher index indicates better durability.

[Table 2]

| | | | Ex. | Com. Ex. | Com. Ex. | Com. Ex. | Com. Ex. | Com. Ex. | Com. Ex. | Com. Ex. | Com. Ex. | Com. Ex. | Ex. | Ex. | Ex. | Ex. | Com. Ex. | Com. Ex. | Com. Ex. | Ex. | Ex. | Com. Ex. | Com. Ex. | Ex. | Ex. | Ex. | Ex. | Ex. | Ex. | Ex. | Ex. | Ex. | Ex. |
|---|---|---|---|---|---|---|---|---|---|---|---|---|---|---|---|---|---|---|---|---|---|---|---|---|---|---|---|---|---|---|---|---|---|
| | | | 1 | 1 | 2 | 3 | 4 | 5 | 6 | 7 | 8 | 9 | 2 | 3 | 4 | 5 | 10 | 11 | 12 | 6 | 7 | 13 | 14 | 8 | 9 | 10 | 11 | 12 | 13 | 14 | 15 | 16 | 17 |
| SBR | | Tufdene 4850 | — | — | — | — | — | — | — | — | — | — | — | — | — | — | — | — | — | — | — | — | — | 105 | 90 | 105 | — | — | — | — | — | — | — |
| | | N9548 | 137.5 | 137.5 | 137.5 | 137.5 | 137.5 | 137.5 | 137.5 | 137.5 | 137.5 | 137.5 | 137.5 | 137.5 | 137.5 | 137.5 | 137.5 | 137.5 | 137.5 | 137.5 | 137.5 | 137.5 | 137.5 | — | — | — | 137.5 | 137.5 | 137.5 | 137.5 | 137.5 | 137.5 | 137.5 |
| | | NS612 | — | — | — | — | — | — | — | — | — | — | — | — | — | — | — | — | — | — | — | — | — | 30 | 40 | — | — | — | — | — | — | — | — |
| BR | | CB25 | — | — | — | — | — | — | — | — | — | — | — | — | — | — | — | — | — | — | — | — | — | — | — | 30 | — | — | — | — | — | — | — |
| Carbon black | | HP180 | 115 | 115 | 115 | 115 | 115 | 115 | 115 | 115 | 115 | 115 | 115 | 115 | 115 | 115 | 115 | 115 | 115 | 115 | 115 | 115 | 115 | 115 | 115 | 115 | 140 | 100 | 85 | 115 | 115 | 115 | 115 |
| Aluminium hydroxide | | Aluminium hydroxide 1 ($N_2SA$: 95 $m^2/g$) | — | — | — | — | — | — | — | — | — | — | — | — | — | — | — | — | — | — | — | — | — | — | — | — | — | — | 10 | — | 10 | — | — |
| | | Aluminium hydroxide 2 ($N_2SA$: 15 $m^2/g$) | — | — | — | — | — | — | — | — | — | — | — | — | — | — | — | — | — | — | — | — | — | — | — | — | — | — | — | — | — | 10 | — |
| | | Aluminium hydroxide 3 ($N_2SA$: 7 $m^2/g$) | — | — | — | — | — | — | — | — | — | — | — | — | — | — | — | — | — | — | — | — | — | — | — | — | — | — | — | — | — | — | 10 |
| Terpene-based resin | Aromatic modified terpene resin | TO125 | — | — | 10 | — | — | — | — | — | — | — | — | — | — | — | — | — | — | 8 | — | 9.5 | — | — | — | — | — | — | — | — | — | — | — |
| | | TO115 | — | — | — | 10 | — | — | — | — | — | — | — | — | — | — | — | — | — | — | — | — | — | — | — | — | — | — | — | — | — | — | — |
| | | TO105 | — | — | — | — | 10 | — | — | — | — | — | — | — | — | — | — | — | — | — | — | — | — | — | — | — | — | — | — | — | — | — | — |
| | | TO85 | — | — | — | — | — | 10 | — | — | — | — | — | — | — | — | — | — | — | — | — | — | — | — | — | — | — | — | — | — | — | — | — |
| | Hydrogenated terpene aromatic resin | M125 | 10 | — | — | — | — | — | — | — | — | — | — | — | — | — | — | — | — | — | — | — | — | — | — | — | — | — | — | — | — | — | — |
| | | M115 | — | — | — | — | — | — | 10 | — | — | — | — | — | — | — | — | — | — | — | — | — | — | — | — | — | — | — | — | — | — | — | — |
| | | M105 | — | — | — | — | — | — | — | 10 | — | — | — | — | — | — | — | — | — | — | — | — | — | — | — | — | — | — | — | — | — | — | — |
| | | M80 | — | — | — | — | — | — | — | — | 10 | — | — | — | — | — | — | — | — | — | — | — | — | — | — | — | — | — | — | — | — | — | — |
| | | Resin 1 | — | — | — | — | — | — | — | — | — | 10 | — | — | — | — | — | — | — | — | — | — | — | — | — | — | — | — | — | — | — | — | — |
| | | Resin 2 | — | — | — | — | — | — | — | — | — | — | 10 | — | — | — | — | — | — | — | — | — | — | — | — | — | — | — | — | — | — | — | — |
| | | Resin 3 | — | — | — | — | — | — | — | — | — | — | — | 10 | — | — | — | — | — | — | — | — | — | — | — | — | — | — | — | — | — | — | — |
| | | Resin 4 | — | — | — | — | — | — | — | — | — | — | — | — | 10 | — | — | — | — | — | — | — | — | — | — | — | — | — | — | — | — | — | — |
| | | Resin 5 | — | — | — | — | — | — | — | — | — | — | — | — | — | 10 | — | — | — | 2 | 40 | 0.5 | 60 | 10 | 10 | 10 | 20 | 5 | 5 | 10 | 10 | 10 | 10 |
| | Terpene phenol resin | T160 | — | — | — | — | — | — | — | — | — | — | — | — | — | — | 10 | — | — | — | — | — | — | — | — | — | — | — | — | — | — | — | — |
| | | G125 | — | — | — | — | — | — | — | — | — | — | — | — | — | — | — | 10 | — | — | — | — | — | — | — | — | — | — | — | — | — | — | — |
| | | TP115 | — | — | — | — | — | — | — | — | — | — | — | — | — | — | — | — | 10 | — | — | — | — | — | — | 10 | — | — | — | — | — | — | — |
| Petroleum-derived resin | Terpene-free resin | Koresin | 30 | 30 | 30 | 30 | 30 | 30 | 30 | 30 | 30 | 30 | 30 | 30 | 30 | 30 | 30 | 30 | 30 | 30 | 30 | 30 | 30 | 30 | 35 | 30 | 50 | 20 | 10 | — | 30 | 30 | 30 |
| | | V-120 | — | — | — | — | — | — | — | — | — | — | — | — | — | — | — | — | — | — | — | — | — | — | — | — | — | — | — | 30 | — | — | — |
| | | SA85 | — | 10 | — | — | — | — | — | — | — | — | — | — | — | — | — | — | — | — | — | — | — | — | — | — | — | — | — | — | — | — | — |
| Oil | | AH-24 | 15 | 15 | 15 | 15 | 15 | 15 | 15 | 15 | 15 | 15 | 15 | 15 | 15 | 15 | 15 | 15 | 15 | 15 | — | 15 | 15 | 17 | 17 | 17 | 30 | — | — | 15 | 15 | 15 | 15 |
| Liquid diene polymer | | L-SBR-820 | 50 | 50 | 50 | 50 | 50 | 50 | 50 | 50 | 50 | 50 | 50 | 50 | 50 | 50 | 50 | 50 | 50 | 50 | 50 | 50 | 50 | 50 | 50 | 50 | 80 | 20 | 5 | 50 | 50 | 50 | 50 |
| Antioxidant | | 6PPD | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 |
| | | TMQ | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 | 1 |
| Stearic acid | | Stearic acid | 3 | 3 | 3 | 3 | 3 | 3 | 3 | 3 | 3 | 3 | 3 | 3 | 3 | 3 | 3 | 3 | 3 | 3 | 3 | 3 | 3 | 3 | 3 | 3 | 3 | 3 | 3 | 3 | 3 | 3 | 3 |
| Zinc oxide | | Finely divided F2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 | 2 | — | — | — | 2 | 2 | 2 | 2 |
| Vulcanizing agent | | 5% Oil-containing sulfur powder | 1.10 | 1.10 | 1.10 | 1.10 | 1.10 | 1.10 | 1.10 | 1.10 | 1.10 | 1.10 | 1.10 | 1.10 | 1.10 | 1.10 | 1.10 | 1.10 | 1.10 | 1.10 | 1.10 | 1.10 | 1.10 | 1.10 | 1.10 | 1.10 | 1.10 | 0.90 | 0.90 | 1.10 | 1.10 | 1.10 | 1.10 |
| | | TP-50 | — | — | — | — | — | — | — | — | — | — | — | — | — | — | — | — | — | — | — | — | — | — | — | — | 6 | 6 | 6 | — | — | — | — |
| Vulcanization accelerator | | TBBS | 4 | 4 | 4 | 4 | 4 | 4 | 4 | 4 | 4 | 4 | 4 | 4 | 4 | 4 | 4 | 4 | 4 | 4 | 4 | 4 | 4 | 4 | 4 | 4 | 4 | 4 | 4 | 4 | 4 | 4 | 4 |
| Total PHR | | | 370.6 | 370.6 | 370.6 | 370.6 | 370.6 | 370.6 | 370.6 | 370.6 | 370.6 | 370.6 | 370.6 | 370.6 | 370.6 | 370.6 | 370.6 | 370.6 | 370.6 | 370.6 | 385.6 | 370.6 | 420.6 | 370.1 | 370.1 | 380.1 | 474.6 | 299.4 | 269.4 | 370.6 | 380.6 | 380.6 | 380.6 |
| Softening point of terpene-based resins (°C) | | | 125 | - | 125 | 115 | 105 | 85 | 115 | 105 | 116 | 126 | 125 | 123 | 124 | 124 | 160 | 125 | 115 | 125 | 124 | 125 | 124 | 124 | 124 | 120 | 124 | 124 | 124 | 124 | 124 | 124 | 124 |
| SP value of diene-based rubbers | | | 8.50 | 8.50 | 8.50 | 8.50 | 8.50 | 8.50 | 8.50 | 8.50 | 8.50 | 8.50 | 8.50 | 8.50 | 8.50 | 8.50 | 8.50 | 8.50 | 8.50 | 8.50 | 8.50 | 8.50 | 8.50 | 8.51 | 8.49 | 8.41 | 8.50 | 8.50 | 8.50 | 8.50 | 8.50 | 8.50 | 8.50 |
| SP value of terpene-based resins | | | 8.52 | - | 8.73 | 8.73 | 8.73 | 8.73 | 8.52 | 8.52 | 8.52 | 8.70 | 8.66 | 8.61 | 8.55 | 8.50 | 8.81 | 9.07 | 8.77 | 8.68 | 8.50 | 8.72 | 8.50 | 8.50 | 8.50 | 8.64 | 8.50 | 8.50 | 8.50 | 8.50 | 8.50 | 8.50 | 8.50 |
| Evaluation result | Initial grip performance (Target≥ 105) | | 110 | 100 | 106 | 106 | 105 | 104 | 107 | 106 | 105 | 106 | 106 | 108 | 114 | 112 | 85 | 95 | 98 | 106 | 118 | 106 | 119 | 108 | 106 | 106 | 124 | 112 | 106 | 112 | 120 | 118 | 114 |
| | Grip performance during middle and late periods of running (Target≥105) | | 112 | 100 | 104 | 98 | 94 | 90 | 99 | 96 | 92 | 104 | 107 | 110 | 116 | 114 | 110 | 105 | 96 | 107 | 107 | 104 | 96 | 110 | 106 | 107 | 120 | 108 | 105 | 111 | 121 | 120 | 118 |
| | Blowing resistance (Target≥ 100) | | 103 | 100 | 100 | 100 | 102 | 102 | 102 | 103 | 102 | 100 | 102 | 103 | 106 | 106 | 92 | 90 | 98 | 101 | 104 | 100 | 80 | 103 | 102 | 101 | 100 | 120 | 125 | 110 | 106 | 106 | 106 |
| | Overall properties (average of three properties) (Target≥ 105) | | 108 | 100 | 103 | 101 | 100 | 99 | 103 | 102 | 100 | 103 | 105 | 107 | 112 | 111 | 96 | 97 | 97 | 105 | 110 | 103 | 98 | 107 | 105 | 105 | 115 | 113 | 112 | 111 | 116 | 115 | 113 |

[Table 3]

| | | | Ex. | Ex. | Ex. | Ex. | Ex. | Ex. | Ex. | Ex. | Ex. | Ex. | Ex. | Com. Ex. | Com. Ex. | Com. Ex. | Com. Ex. | Com. Ex. | Com. Ex. | Com. Ex. | Com. Ex. |
|---|---|---|---|---|---|---|---|---|---|---|---|---|---|---|---|---|---|---|---|---|---|
| | | | 18 | 19 | 20 | 21 | 22 | 23 | 24 | 25 | 26 | 27 | 28 | 15 | 16 | 17 | 18 | 19 | 20 | 21 | 22 |
| NR | | TSR20 | 80 | 80 | 80 | 80 | 80 | 100 | 60 | 80 | 80 | 80 | 80 | 80 | 80 | 80 | 80 | 80 | 80 | 80 | 80 |
| BR | | CB25 | 20 | 20 | 20 | 20 | 20 | — | 40 | 20 | 20 | 20 | 20 | 20 | 20 | 20 | 20 | 20 | 20 | 20 | 20 |
| Carbon black | | HP180 | 45 | 45 | 45 | 45 | 45 | 45 | 45 | 43 | 43 | 43 | 41 | 45 | 45 | 45 | 45 | 45 | 45 | 45 | 45 |
| | | N220 | — | — | — | — | 3 | — | — | — | — | — | — | — | — | — | — | — | — | — | — |
| Silica | | VN3 | — | — | — | — | — | — | — | — | — | — | 10 | — | — | — | — | — | — | — | — |
| Aluminium hydroxide | | Aluminium hydroxide 1 ($N_2SA$: 95 $m^2/g$) | — | — | — | — | — | — | — | 10 | — | — | — | — | — | — | — | — | — | — | — |
| | | Aluminium hydroxide 2 ($N_2SA$: 15 $m^2/g$) | — | — | — | — | — | — | — | — | 10 | — | — | — | — | — | — | — | — | — | — |
| | | Aluminium hydroxide 3 ($N_2SA$: 7 $m^2/g$) | — | — | — | — | — | — | — | — | — | 10 | — | — | — | — | — | — | — | — | — |
| Terpene-based resin | Hydrogenated terpene aromatic resin | M125 | 5 | — | — | 3 | 10 | 5 | 7 | 5 | 5 | 5 | 5 | — | — | — | — | — | — | — | — |
| | | Resin 5 | — | 5 | — | — | — | — | — | — | — | — | — | — | — | — | — | — | — | — | — |
| | | Resin 3 | — | — | 5 | — | — | — | — | — | — | — | — | — | — | — | — | — | — | — | — |
| | Aromatic ring-modified terpene resin | TO125 | — | — | — | — | — | — | — | — | — | — | — | — | 5 | — | — | — | — | — | — |
| | Terpene phenol resin | T160 | — | — | — | — | — | — | — | — | — | — | — | — | — | 5 | — | — | — | — | — |
| | | G125 | — | — | — | — | — | — | — | — | — | — | — | — | — | — | 5 | — | — | — | — |
| | | TP115 | — | — | — | — | — | — | — | — | — | — | — | — | — | — | — | 5 | — | — | — |
| Petroleum-derived resin | Terpene-free resin | Koresin | — | — | — | — | — | — | — | — | — | — | — | — | — | — | — | — | 5 | — | — |
| | | V-120 | — | — | — | — | — | — | — | — | — | — | — | — | — | — | — | — | — | 5 | — |
| | | SA85 | — | — | — | — | — | — | — | — | — | — | — | 5 | — | — | — | — | — | — | — |
| Wax | | Ozoace355 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Antioxidant | | 6PPD | 2 | 2 | 2 | 2 | 2 | 2 | 2 | 2 | 2 | 2 | 2 | 2 | 2 | 2 | 2 | 2 | 2 | 2 | 2 |
| | | TMQ | 1 | 1 | 1 | 1 | 1 | 1 | 1 | 1 | 1 | 1 | 1 | 1 | 1 | 1 | 1 | 1 | 1 | 1 | 1 |
| Stearic acid | | Stearic acid | 2 | 2 | 2 | 2 | 2 | 2 | 2 | 2 | 2 | 2 | 2 | 2 | 2 | 2 | 2 | 2 | 2 | 2 | 2 |
| Zinc oxide | | # 2 | 3 | 3 | 3 | 3 | 3 | 3 | 3 | 3 | 3 | 3 | 3 | 3 | 3 | 3 | 3 | 3 | 3 | 3 | 3 |
| Vulcanizing agent | | 5% Oil-containing sulfur powder | 1.50 | 1.50 | 1.50 | 1.50 | 1.50 | 1.50 | 1.50 | 1.50 | 1.50 | 1.50 | 1.50 | 1.50 | 1.50 | 1.50 | 1.50 | 1.50 | 1.50 | 1.50 | 1.50 |
| Vulcanization accelerator | | TBBS | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 | 1.5 |
| Total PHR | | | 162.5 | 162.5 | 162.5 | 160.5 | 170.5 | 162.5 | 164.5 | 170.5 | 170.5 | 170.5 | 168.5 | 162.5 | 162.5 | 162.5 | 162.5 | 162.5 | 162.5 | 162.5 | 157.5 |
| Softening point of terpene-based resins (°C) | | | 125 | 124 | 123 | 125 | 125 | 125 | 125 | 125 | 125 | 125 | 125 | — | 125 | 160 | 125 | 115 | — | — | — |
| SP value of diene-based rubbers | | | 8.12 | 8.12 | 8.12 | 8.12 | 8.12 | 8.10 | 8.14 | 8.12 | 8.12 | 8.12 | 8.12 | 8.12 | 8.12 | 8.12 | 8.12 | 8.12 | 8.12 | 8.12 | 8.12 |
| SP value of terpene-based resins | | | 8.52 | 8.50 | 8.61 | 8.52 | 8.52 | 8.52 | 8.52 | 8.52 | 8.52 | 8.52 | 8.52 | — | 8.73 | 8.81 | 9.07 | 8.77 | — | — | — |
| SP value of petroleum-derived resins | | | — | — | — | — | — | — | — | — | — | — | — | 9.10 | — | — | — | — | 9.10 | 9.00 | — |
| Evaluation result | Handling performance Hs was adjusted to 62±1 at room temperature. | | | | | | | | | | | | | | | | | | | | |
| | Wet grip performance (Target≥ 100) | | 105 | 106 | 104 | 103 | 109 | 108 | 103 | 116 | 114 | 110 | 108 | 100 | 103 | 94 | 98 | 100 | 94 | 95 | 94 |
| | Fuel economy (Target≥ 100) | | 105 | 105 | 103 | 103 | 101 | 100 | 108 | 106 | 108 | 108 | 106 | 100 | 102 | 94 | 100 | 101 | 90 | 92 | 102 |
| | Elongation at break EB (Target≥ 100) | | 103 | 105 | 103 | 102 | 108 | 111 | 100 | 102 | 102 | 101 | 106 | 100 | 102 | 102 | 102 | 102 | 95 | 101 | 102 |
| | Overall properties (average of three properties) (Target≥ 103) | | 104 | 105 | 103 | 103 | 106 | 106 | 104 | 108 | 108 | 106 | 107 | 100 | 102 | 97 | 100 | 101 | 93 | 96 | 99 |

The results shown in Tables 2 and 3 demonstrate that in the examples containing a predetermined amount of a hydrogenated terpene aromatic resin that was obtained by hydrogenation of the double bonds of a terpene aromatic resin and had a degree of hydrogenation of double bonds of 5% to 100%, a hydroxyl value of 20 mg KOH/g or less, and a softening point of 116°C to 180°C, the initial grip performance and stable grip performance during the middle and late periods of running, especially both properties on dry roads, were simultaneously highly improved, and further the occurrence of blowing even during high-temperature running was reduced. It is also demonstrated that a balanced improvement in grip performance, especially wet grip performance, fuel economy, and durability was achieved in the examples.

In addition, the improvements of the properties were found to be accomplished regardless of the polymer system, the softener content, and the amount and type of filler.

## Claims

1. A pneumatic tire, comprising a tread, the tread being formed from a rubber composition comprising a diene rubber, the rubber composition further comprising a hydrogenated terpene aromatic resin obtained by hydrogenation of double bonds of a terpene aromatic resin,
   the hydrogenated terpene aromatic resin having a degree of hydrogenation of double bonds of 5% to 100%, a hydroxyl value of 20 mg KOH/g or less, and a softening point of 116°C to 180°C,
   the hydrogenated terpene aromatic resin being present in an amount of 1 to 50 parts by mass per 100 parts by mass of the diene rubber.

2. The pneumatic tire according to claim 1,
   wherein the hydrogenated terpene aromatic resin has a softening point of 116°C to 160°C.

3. The pneumatic tire according to claim 1 or 2,
   wherein the hydrogenated terpene aromatic resin has a hydroxyl value of 0 mg KOH/g.

4. The pneumatic tire according to any one of claims 1 to 3,
   wherein the diene rubber comprises 60% by mass or more of a styrene butadiene rubber having a styrene content of 19% to 60% by mass.

5. The pneumatic tire according to any one of claims 1 to 4,
   wherein all components of the rubber composition are present in a total amount of 270% by mass or more per 100% by mass of the diene rubber.

6. The pneumatic tire according to any one of claims 1 to 5,
   wherein the rubber composition further comprises an inorganic filler having a nitrogen adsorption specific surface area of 5 to 120 $m^2/g$ in an amount of 1 to 70 parts by mass per 100 parts by mass of the diene rubber, and the inorganic filler comprises at least one selected from the group consisting of compounds represented by the formula below, magnesium sulfate, and silicon carbide,

   $$mM \cdot xSiO_y \cdot zH_2O$$

   wherein M represents at least one metal selected from the group consisting of Al, Mg, Ti, Ca, and Zr, or an oxide or hydroxide of the metal; m represents an integer of 1 to 5; x represents an integer of 0 to 10; y represents an integer of 2 to 5; and z represents an integer of 0 to 10.

7. The pneumatic tire according to claim 6,
   wherein the inorganic filler is aluminum hydroxide.

## Patentansprüche

1. Luftreifen, umfassend einen Laufstreifen, wobei der Laufstreifen gebildet ist aus einer einen Dienkautschuk umfassenden Kautschukzusammensetzung,

   wobei die Kautschukzusammensetzung zudem ein durch Hydrierung von Doppelbindungen eines aromatischen

Terpenharzes erhaltenes hydriertes aromatisches Terpenharz umfasst,
wobei das hydrierte aromatische Terpenharz einen Hydrierungsgrad der Doppelbindungen von 5% bis 100%, eine Hydroxylzahl von 20 mg KOH/g oder weniger und einen Erweichungspunkt von 116 °C bis 180 °C aufweist,
wobei das hydrierte aromatische Terpenharz in einer Menge von 1 bis 50 Massenteilen pro 100 Massenteile des Dienkautschuks vorhanden ist.

**2.** Luftreifen nach Anspruch 1,
wobei das hydrierte aromatische Terpenharz einen Erweichungspunkt von 116 °C bis 160 °C aufweist.

**3.** Luftreifen nach Anspruch 1 oder 2,
wobei das hydrierte aromatische Terpenharz eine Hydroxylzahl von 0 mg KOH/g aufweist.

**4.** Luftreifen nach einem der Ansprüche 1 bis 3,
wobei der Dienkautschuk 60 Massenprozent oder mehr eines StyrolButadien-Kautschuks mit einem Styrolgehalt von 19 bis 60 Massenprozent umfasst.

**5.** Luftreifen nach einem der Ansprüche 1 bis 4,
wobei alle Komponenten der Kautschukzusammensetzung in einer Gesamtmenge von 270 Massenprozent oder mehr pro 100 Massenprozent des Dienkautschuks vorhanden sind.

**6.** Luftreifen nach einem der Ansprüche 1 bis 5,
wobei die Kautschukzusammensetzung zudem einen anorganischen Füllstoff mit einer spezifischen Stickstoffadsorptions-Oberfläche von 5 bis 120 $m^2/g$ in einer Menge von 1 bis 70 Massenteilen pro 100 Massenteile des Dienkautschuks umfasst, und der anorganische Füllstoff zumindest eines umfasst, welches ausgewählt ist aus der Gruppe bestehend aus Verbindungen gemäß der untenstehenden Formel, Magnesiumsulfat und Siliciumcarbid,

$$mM \cdot xSiO_y \cdot zH_2O$$

wobei M für mindestens ein aus der Gruppe bestehend aus Al, Mg, Ti, Ca und Zr ausgewähltes Metall oder ein Oxid oder Hydroxid des Metalls steht; m für eine ganze Zahl von 1 bis 5 steht; x für eine ganze Zahl von 0 bis 10 steht; y für eine ganze Zahl von 2 bis 5 steht; und z für eine ganze Zahl von 0 bis 10 steht.

**7.** Luftreifen nach Anspruch 6,
wobei der anorganische Füllstoff Aluminiumhydroxid ist.

## Revendications

**1.** Pneumatique, comprenant une bande, la bande étant formée d'une composition de caoutchouc comprenant un caoutchouc de diène,
la composition de caoutchouc comprenant en outre une résine aromatique de terpène hydrogéné obtenue par hydrogénation de double liaisons d'une résine aromatique de terpène,
la résine aromatique de terpène hydrogéné ayant un degré d'hydrogénation de double liaisons de 5 % à 100 %, une valeur d'hydroxyle de 20 mg KOH/g ou moins, et un point de ramollissement de 116 °C à 180 °C,
la résine aromatique de terpène hydrogéné étant présente en une quantité de 1 à 50 parties en masse par 100 parties en masse du caoutchouc de diène.

**2.** Pneumatique selon la revendication 1,
dans lequel la résine aromatique de terpène hydrogéné a un point de ramollissement de 116 °C à 160 °C.

**3.** Pneumatique selon la revendication 1 ou 2,
dans lequel la résine aromatique de terpène hydrogéné a une valeur d'hydroxyle de 0 mg KOH/g.

**4.** Pneumatique selon l'une quelconque des revendications 1 à 3,
dans lequel le caoutchouc de diène comprend 60 % en masse ou plus d'un caoutchouc de styrène butadiène ayant une teneur en styrène de 19 % à 60 % en masse.

**5.** Pneumatique selon l'une quelconque des revendications 1 à 4,

dans lequel tous les composants de la composition de caoutchouc sont présents en une quantité totale de 270 % en masse ou plus par 100 % en masse du caoutchouc de diène.

**6.** Pneumatique selon l'une quelconque des revendications 1 à 5,
dans lequel la composition de caoutchouc comprend en outre une charge inorganique ayant une surface spécifique d'adsorption d'azote de 5 à 120 $m^2/g$ en une quantité de 1 à 70 parties en masse par 100 parties en masse du caoutchouc de diène, et la charge inorganique comprend au moins un choisi dans le groupe constitué par des composés représentés par la formule ci-dessous, du sulfate de magnésium et du carbure de silicium,

$$mM \cdot xSiO_y \cdot zH_2O,$$

où M représente au moins un métal choisi dans le groupe constitué par Al, Mg, Ti, Ca et Zr, ou un oxyde ou un hydroxyde du métal ; m représente un nombre entier de 1 à 5 ; x représente un nombre entier de 0 à 10 ; y représente un nombre entier de 2 à 5 ; et z représente un nombre entier de 0 à 10.

**7.** Pneumatique selon la revendication 6, dans lequel la charge organique est l'hydroxyde d'aluminium.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2103650 A1
- JP 2014231612 A
- JP 2009138025 A
- JP 2011088998 A
- JP 2008208265 A
- EP 2799480 A1
- US 20110213049 A1
- US 20140155520 A1
- JP 2004137463 A